(19) Europäisches Patentamt
European Patent Office
Office européen des brevets

(11) EP 4 501 113 A1

(12) EUROPEAN PATENT APPLICATION
published in accordance with Art. 153(4) EPC

(43) Date of publication:
**05.02.2025 Bulletin 2025/06**

(21) Application number: **23780506.4**

(22) Date of filing: **28.03.2023**

(51) International Patent Classification (IPC):
***A01N 43/64*** *(2006.01)* ***A01N 43/56*** *(2006.01)*
***A01P 3/00*** *(2006.01)* ***C08G 18/00*** *(2006.01)*
***C08G 18/08*** *(2006.01)* ***C08G 18/28*** *(2006.01)*
***C08G 18/80*** *(2006.01)*

(52) Cooperative Patent Classification (CPC):
**A01N 43/56; A01N 43/64; A01P 3/00; C08G 18/00; C08G 18/08; C08G 18/28; C08G 18/80**

(86) International application number:
**PCT/JP2023/012471**

(87) International publication number:
**WO 2023/190497 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022055966**

(71) Applicant: **Mitsui Chemicals, Inc.**
**Tokyo 104-0028 (JP)**

(72) Inventors:
- **SHINOHARA, Naoki**
**Shizuoka-shi, Shizuoka 424-8710 (JP)**
- **SHIBATA, Tatsuya**
**Sodegaura-shi, Chiba 299-0265 (JP)**
- **FUKUDA, Kazuyuki**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) ANTIBACTERIAL AGENT

(57) An antibacterial agent includes a block isocyanate. The block isocyanate includes a capped residue (A) of a polyisocyanate, an antibacterial-non-block capping group (B), and a non-antibacterial-block capping group (C). The capped residue (A) of the polyisocyanate is formed by capping an isocyanate group of the polyisocyanate having a plurality of isocyanate groups. The antibacterial-non-block capping group (B) is formed by non-reproducibly capping at least a portion of the plurality of isocyanate groups. The non-antibacterial-block capping group (C) is formed by reproducibly capping at least a portion of the plurality of isocyanate groups. The antibacterial-non-block capping group (B) includes a quaternary ammonium group.



Processed by Luminess, 75001 PARIS (FR)

**Description**

TECHNICAL FIELD

The present invention relates to an antibacterial agent.

BACKGROUND ART

Conventionally, as an antibacterial agent, a compound containing a quaternary ammonium salt has been known. In addition, a method for fixing and using such an antibacterial agent on the surface of various articles has been known.

More specifically, a method has been proposed in which an article containing a resin component having a carboxyl group is brought into contact with a solution of the antibacterial agent containing an ethoxysilane-based quaternary ammonium salt to add the ethoxysilane-based quaternary ammonium salt to the surface of the article (ref: for example, Patent Document 1).

In this method, the antibacterial agent is fixed to the article by a reaction of the carboxyl group of the resin component having the carboxyl group with an ethoxysilane group of the ethoxysilane-based quaternary ammonium salt.

Citation List

Patent Document

Patent Document 1: International Publication No. 2013/047642

SUMMARY OF THE INVENTION

PROBLEM TO BE SOLVED BY THE INVENTION

However, in the method described in Patent Document 1, it is necessary to select the resin component having the carboxyl group as the article (object to be fixed), and it is necessary to select the ethoxysilane-based quaternary ammonium salt as the antibacterial agent (fixed product). Therefore, there is a problem that a degree of freedom in selecting the article (object to be fixed) is relatively low.

The present invention provides an antibacterial agent having excellent antibacterial properties and capable of selecting an object to be fixed at a relatively high degree of freedom.

MEANS FOR SOLVING THE PROBLEM

The present invention [1] includes an antibacterial agent including a block isocyanate, wherein the block isocyanate includes a capped residue (A) of a polyisocyanate, an antibacterial-non-block capping group (B), and a non-antibacterial-block capping group (C); the capped residue (A) of the polyisocyanate is formed by capping an isocyanate group of the polyisocyanate having a plurality of isocyanate groups; the antibacterial-non-block capping group (B) is formed by non-reproducibly capping at least a portion of the plurality of isocyanate groups; the non-antibacterial-block capping group (C) is formed by reproducibly capping at least a portion of the plurality of isocyanate groups; and the antibacterial-non-block capping group (B) includes a quaternary ammonium group.

The present invention [2] includes the antibacterial agent described in the above-described [1], wherein the block isocyanate further includes an antibacterial-block capping group (D), the antibacterial-block capping group (D) is formed by reproducibly capping at least a portion of the plurality of isocyanate groups, and the antibacterial-block capping group (D) includes a tertiary ammonium salt.

The present invention [3] includes the antibacterial agent described in the above-described [1] or [2], wherein the block isocyanate further includes a hydrophilic group (E), the hydrophilic group (E) is formed by non-reproducibly capping at least a portion of the plurality of isocyanate groups, and the hydrophilic group (E) includes a polyoxyethylene group.

The present invention [4] includes the antibacterial agent described in any one of the above-described [1] to [3], wherein the block isocyanate is not subjected to a quaternized treatment.

The present invention [5] includes the antibacterial agent described in any one of the above-described [1] to [4], wherein the block isocyanate is a reaction product of a raw material component; the raw material component includes a polyisocyanate (a) having a plurality of isocyanate groups and for forming the capped residue (A), an antibacterial-non-block capping agent (b) reactable with at least a portion of the plurality of isocyanate groups and for forming the antibacterial-non-block capping group (B), and a non-antibacterial-block capping agent (c) reactable with at least a portion of the plurality of isocyanate groups and for forming the non-antibacterial-block capping group (C); and the

antibacterial-non-block capping agent (b) includes a quaternary ammonium group-containing compound.

The present invention [6] includes the antibacterial agent described in the above-described [5], wherein a ratio of the antibacterial-non-block capping agent (b) is 5 mol or more with respect to 100 mol of the isocyanate group of the polyisocyanate (a).

The present invention [7] includes the antibacterial agent described in the above-described [5] or [6], wherein the quaternary ammonium group-containing compound includes a trialkylalkanol ammonium compound.

The present invention [8] includes the antibacterial agent described in any one of the above-described [5] to [7], wherein the raw material component further includes a tertiary amino group-containing compound (d1) reactable with at least a portion of the plurality of isocyanate groups and for adding a tertiary amino group, and an acid (d2) capable of neutralizing at least a portion of the tertiary amino group and for forming a tertiary ammonium salt.

The present invention [9] includes the antibacterial agent described in any one of the above-described [5] to [8], wherein the raw material component further includes a hydrophilic compound (e), and the hydrophilic compound (e) includes a polyoxyethylene compound.

The present invention [10] includes the antibacterial agent described in any one of the above-described [1] to [9], wherein the polyisocyanate includes an araliphatic polyisocyanate derivative.

## EFFECT OF THE INVENTION

The antibacterial agent of the present invention includes a block isocyanate. The block isocyanate includes the capped residue (A) of the polyisocyanate, the antibacterial-non-block capping group (B), and the non-antibacterial-block capping group (C). Further, the antibacterial-non-block capping group (B) includes the quaternary ammonium group. Therefore, the above-described antibacterial agent has excellent antibacterial properties, and is capable of being fixed in a resin at a relatively high degree of freedom.

## DESCRIPTION OF EMBODIMENTS

### 1. Antibacterial Agent

#### (1) Block Isocyanate

An antibacterial agent includes a block isocyanate. The block isocyanate is a compound including a latent isocyanate group. The latent isocyanate group is a functional group which is capable of reproducing an isocyanate group (active isocyanate group) by deblocking.

More specifically, the block isocyanate includes a capped residue (A) of a polyisocyanate, an antibacterial-non-block capping group (B), and a non-antibacterial-block capping group (C).

#### (2) Capped Residue (A) of Polyisocyanate

The capped residue (A) of the polyisocyanate is a main molecular skeleton of the block isocyanate. The capped residue (A) of the polyisocyanate is a residue formed by capping the isocyanate group of the polyisocyanate (described later). The capping includes block capping and non-block capping.

#### (3) Antibacterial-Non-Block Capping Group (B)

The antibacterial-non-block capping group (B) is formed by non-reproducibly capping at least a portion of the isocyanate group of the polyisocyanate (described later). That is, the antibacterial non-block capping group (B) is a deblocking-impossible end capping group.

Further, the antibacterial-non-block capping group (B) has antibacterial properties. More specifically, the antibacterial-non-block capping group (B) includes a quaternary ammonium group.

The quaternary ammonium group is a cationic group in which four atoms other than a hydrogen atom are bonded with respect to one nitrogen atom. By the quaternary ammonium group, the block isocyanate having excellent water dispersibility is obtained. The quaternary ammonium group is, for example, neutralized by a counterion.

An example of the quaternary ammonium group includes a trialkylammonium group. An example of the trialkylammonium group includes a trialkylammonium group having an alkyl group having 1 to 8 carbon atoms, and preferably, a trialkylammonium group having an alkyl group having 1 to 4 carbon atoms is used. More specifically, examples of the trialkylammonium group include trimethylammonium groups, triethylammonium groups, dimethylethylammonium groups, methyldiethylammonium groups, tripropylammonium groups, and tributylammonium groups. These may be used alone or in combination of two or more. As the trialkylammonium group, preferably, a trimethylammonium

group is used.

Examples of the counterion of the quaternary ammonium group include chloride ions, bromide ions, iodide ions, acetate ions, carbonate ions, phosphate ions, hydroxide ions, citrate ions, tartrate ions, bitartrate ions, and lactate ions. These may be used alone or in combination of two or more. As the counterion, preferably, a chloride ion, a bromide ion, and an acetate ion are used, more preferably, a chloride ion is used.

The antibacterial-non-block capping group (B) is chemically bonded to the capped residue (A) of the polyisocyanate.

A ratio of the antibacterial-non-block capping group (B) is, from the viewpoint of antibacterial properties, the water dispersibility, and storage stability, for example, 5 mol or more, preferably 10 mol or more, more preferably 15 mol or more with respect to 100 mol of the isocyanate group of the polyisocyanate (described later) forming the capped residue (A). In addition, the ratio of the antibacterial-non-block capping group (B) is, from the viewpoint of durability, for example, 80 mol or less, preferably 60 mol or less, and from the viewpoint of the water dispersibility and the storage stability, more preferably 40 mol or less, further more preferably 30 mol or less, particularly preferably 25 mol or less with respect to 100 mol of the isocyanate group of the polyisocyanate (described later) forming the capped residue (A).

In addition, the ratio of the antibacterial-non-block capping group (B) is, from the viewpoint of the antibacterial properties, the water dispersibility, and the storage stability, for example, 5 mol or more, preferably 10 mol or more, more preferably 15 mol or more with respect to 100 mol of the total sum of the antibacterial-non-block capping group (B) and the non-antibacterial-block capping group (C). In addition, the ratio of the antibacterial-non-block capping group (B) is, from the viewpoint of the durability, for example, 80 mol or less, preferably 60 mol or less, and from the viewpoint of the water dispersibility and the storage stability, more preferably 40 mol or less, further more preferably 30 mol or less, particularly preferably 25 mol or less with respect to 100 mol of the total sum of the antibacterial-non-block capping group (B) and the non-antibacterial-block capping group (C).

Further, the ratio of the antibacterial-non-block capping group (B) is, for example, 2.0 parts by mass or more, preferably 4.5 parts by mass or more with respect to 100 parts by mass of the polyisocyanate (described later) forming the capped residue (A). Further, the ratio of the antibacterial-non-block capping group (B) is, for example, 20.0 parts by mass or less, preferably 15.0 parts by mass or less with respect to 100 parts by mass of the polyisocyanate (described later) forming the capped residue (A).

(4) Non-Antibacterial-Block Capping Group (C)

The non-antibacterial-block capping group (C) is formed by reproducibly capping at least a portion of the isocyanate group of the polyisocyanate (described later). That is, the non-antibacterial-block capping group (C) is a deblocking-possible latent isocyanate group (block isocyanate group).

Also, the non-antibacterial-block capping group (C) does not have the antibacterial properties. Examples of the non-antibacterial-block capping group (C) include known latent isocyanate groups (block isocyanate group).

The non-antibacterial-block capping group (C) is chemically bonded to the capped residue (A) of the polyisocyanate.

The ratio of the non-antibacterial-block capping group (C) is, from the viewpoint of the durability, for example, 20 mol or more, preferably 40 mol or more, and from the viewpoint of the water dispersibility and the storage stability, more preferably 60 mol or more, further more preferably 70 mol or more, particularly preferably 75 mol or more with respect to 100 mol of the isocyanate group of the polyisocyanate (described later) forming the capped residue (A). In addition, the ratio of the non-antibacterial-block capping group (C) is, from the viewpoint of the antibacterial properties, the water dispersibility, and the storage stability, for example, 95 mol or less, preferably 90 mol or less, more preferably 85 mol or less with respect to 100 mol of the isocyanate group of the polyisocyanate (described later) forming the capped residue (A).

In addition, the ratio of the non-antibacterial-block capping group (C) is, from the viewpoint of the durability, for example, 20 mol or more, preferably 40 mol or more, and from the viewpoint of the water dispersibility and the storage stability, more preferably 60 mol or more, further more preferably 70 mol or more, particularly preferably 75 mol or more with respect to 100 mol of the total sum of the antibacterial-non-block capping group (B) and the non-antibacterial-block capping group (C). In addition, the ratio of the non-antibacterial-block capping group (C) is, from the viewpoint of the antibacterial properties, the water dispersibility, and the storage stability, for example, 95 mol or less, preferably 90 mol or less, more preferably 85 mol or less with respect to 100 mol of the total sum of the antibacterial-non-block capping group (B) and the non-antibacterial-block capping group (C).

Further, the ratio of the non-antibacterial-block capping group (C) is, for example, 18.0 parts by mass or more, preferably 22.0 parts by mass or more with respect to 100 parts by mass of the polyisocyanate (described later) forming the capped residue (A). Further, the ratio of the non-antibacterial-block capping group (C) is, for example, 33.0 parts by mass or less, preferably 30.0 parts by mass or less with respect to 100 parts by mass of the polyisocyanate (described later) forming the capped residue (A).

The non-antibacterial-block capping group (C) is deblocked (dissociated) by heating, thereby reproducing the

isocyanate group. A dissociation temperature of the non-antibacterial-block capping group (C) is, for example, 50°C or more. Further, the dissociation temperature of the non-antibacterial-block capping group (C) is, for example, 150°C or less, preferably 140°C or less, more preferably 130°C or less.

(5) Antibacterial-Block Capping Group (D)

The block isocyanate may further include an antibacterial-block capping group (D). By the antibacterial-block capping group (D), it is possible to improve reactivity (curability) of the block isocyanate.

The antibacterial-block capping group (D) is formed by reproducibly capping at least a portion of the isocyanate group of the polyisocyanate (described later). That is, the antibacterial-block capping group (D) is the deblocking-possible latent isocyanate group (block isocyanate group).

Further, the antibacterial-block capping group (D) has the antibacterial properties. More specifically, an example of the antibacterial-block capping group (D) includes a tertiary ammonium salt.

The tertiary ammonium salt is, for example, formed by neutralizing a tertiary amino group by an acid.

The tertiary amino group is an amino group in which three atoms other than the hydrogen atom are mono-bonded with respect to one nitrogen atom. In other words, an amino group formed by double bonding or triple bonding of the atom other than the hydrogen atom with respect to one nitrogen atom is not the tertiary amino group. Further, the tertiary amino group may be also included in a heterocyclic structure.

Examples of the tertiary amino group include dialkylamino groups. An example of the dialkylamino group includes a dialkylamino group having an alkyl group having 1 to 8 carbon atoms, and preferably, a dialkylamino group having an alkyl group having 1 to 4 carbon atoms is used. More specifically, examples of the dialkylamino group include dimethylamino groups, diethylamino groups, dipropylamino groups, diisopropylamino groups, dibutylamino groups, diisobutylamino groups, di-s-butylamino groups, and di-t-butylamino groups. These may be used alone or in combination of two or more. As the dialkylamino group, preferably, a dimethylamino group is used.

Examples of the acid capable of neutralizing the tertiary amino group include organic acids and inorganic acids, and preferably, an organic acid is used. Examples of the organic acid include carboxylic acids. Examples of the carboxylic acid include acetic acids, propionic acids, and lactic acids. These may be used alone or in combination of two or more.

The antibacterial-block capping group (D) is chemically bonded to the capped residue (A) of the polyisocyanate.

The ratio of the antibacterial-block capping group (D) is, from the viewpoint of the antibacterial properties, the water dispersibility, and the storage stability, for example, 0.1 mol or more, preferably 1 mol or more with respect to 100 mol of the isocyanate group of the polyisocyanate (described later) forming the capped residue (A). In addition, the ratio of the antibacterial-block capping group (D) is, from the viewpoint of the antibacterial properties, the water dispersibility, and the storage stability, for example, 20 mol or less, preferably 10 mol or less with respect to 100 mol of the isocyanate group of the polyisocyanate (described later) forming the capped residue (A).

Further, the ratio of the antibacterial-block capping group (D) is, for example, 1 mol or more, preferably 5 mol or more, more preferably 10 mol or more with respect to 100 mol of the antibacterial-non-block capping group (B). In addition, the ratio of the antibacterial-block capping group (D) is, from the viewpoint of the antibacterial properties, the water dispersibility, and the storage stability, for example, 40 mol or less, preferably 35 mol or less, more preferably 30 mol or less with respect to 100 mol of the antibacterial-non-block capping group (B).

Further, the ratio of the antibacterial-block capping group (D) is, for example, 0.1 parts by mass or more, preferably 1.3 parts by mass or more with respect to 100 parts by mass of the polyisocyanate (described later) forming the capped residue (A). Further, the ratio of the antibacterial-block capping group (D) is, for example, 15.0 parts by mass or less, preferably 12.0 parts by mass or less with respect to 100 parts by mass of the polyisocyanate (described later) forming the capped residue (A).

The antibacterial-block capping group (D) can be deblocked (dissociated) by heating, and the isocyanate group can be reproduced. However, the antibacterial-block capping group (D) may not be deblocked (dissociated), and the isocyanate group may not be reproduced in accordance with temperature conditions.

More specifically, the dissociation temperature of the antibacterial-block capping group (D) is preferably higher than the dissociation temperature of the non-antibacterial-block capping group (C). When the dissociation temperature of the antibacterial-block capping group (D) is higher than the dissociation temperature of a block group of the non-antibacterial-block capping group (C), it is possible to preferentially dissociate the non-antibacterial-block capping group (C), while suppressing the dissociation of the antibacterial-block capping group (D). Therefore, when a resin (described later) is formed by the dissociation of the non-antibacterial-block capping group (C), it is possible to fix the antibacterial-block capping group (D) to the resin.

The dissociation temperature of the antibacterial-block capping group (D) is, for example, 60°C or more, preferably 100°C or more. Further, the dissociation temperature of the non-antibacterial-block capping group (C) is, for example, 200°C or less, preferably 180°C or less, more preferably 160°C or less.

A difference between the dissociation temperature of the non-antibacterial-block capping group (C) and the

dissociation temperature of the antibacterial-block capping group (D) is, for example, 1°C or more, preferably 10°C or more. Further, the difference between the dissociation temperature of the non-antibacterial-block capping group (C) and the dissociation temperature of the antibacterial-block capping group (D) is, for example, 50°C or less, preferably 40°C or less.

(6) Hydrophilic Group (E)

The block isocyanate may further include a hydrophilic group (E). By the hydrophilic group (E), it is possible to improve the water dispersibility of the block isocyanate.

The hydrophilic group (E) is formed by non-reproducibly capping at least a portion of the isocyanate group of the polyisocyanate (described later). That is, the hydrophilic group (E) is the deblocking-impossible end capping group.

Examples of the hydrophilic group (E) include anionic groups and nonionic groups, and preferably, a nonionic group is used. Examples of the nonionic group include polyoxyethylene groups. In the polyoxyethylene group, a repetition number of an oxyethylene unit is, for example, 3 or more, preferably 5 or more. Further, the repetition number of the oxyethylene unit is, for example, 100 or less, preferably 50 or less.

The hydrophilic group (E) is chemically bonded to the capped residue (A) of the polyisocyanate.

The ratio of the hydrophilic group (E) is, from the viewpoint of the antibacterial properties, the water dispersibility, and the storage stability, for example, 0.1 mol or more, preferably 1 mol or more with respect to 100 mol of the isocyanate group of the polyisocyanate (described later) forming the capped residue (A). In addition, the ratio of the hydrophilic group (E) is, from the viewpoint of the antibacterial properties, the water dispersibility, and the storage stability, for example, 20 mol or less, preferably 10 mol or less with respect to 100 mol of the isocyanate group of the polyisocyanate (described later) forming the capped residue (A).

Further, the ratio of the hydrophilic group (E) is, for example, 1 mol or more, preferably 3 mol or more, more preferably 5 mol or more with respect to 100 mol of the antibacterial-non-block capping group (B). In addition, the ratio of the hydrophilic group (E) is, from the viewpoint of the antibacterial properties, the water dispersibility, and the storage stability, for example, 30 mol or less, preferably 25 mol or less, more preferably 20 mol or less with respect to 100 mol of the antibacterial-non-block capping group (B).

Further, the ratio of the hydrophilic group (E) is, for example, 0.1 parts by mass or more, preferably 1.0 part by mass or more with respect to 100 parts by mass of the polyisocyanate (described later) forming the capped residue (A). Further, the ratio of the hydrophilic group (E) is, for example, 65.0 parts by mass or less, preferably 32.0 parts by mass or less with respect to 100 parts by mass of the polyisocyanate (described later) forming the capped residue (A).

2. Method for Producing Block Isocyanate

(1) Raw Material Component

It is possible to obtain the block isocyanate as a reaction product of the following raw material component. The raw material component of the block isocyanate includes, for example, a polyisocyanate (a), an antibacterial-non-block capping agent (b), and a non-antibacterial-block capping agent (c).

(2) Polyisocyanate (a)

The polyisocyanate (a) is a raw material compound for forming the capped residue (A). The polyisocyanate (a) has the plurality of isocyanate groups. Examples of the polyisocyanate (a) include polyisocyanate monomers and polyisocyanate derivatives.

Examples of the polyisocyanate monomer include aliphatic polyisocyanates, aromatic polyisocyanates, and araliphatic polyisocyanates.

Examples of the aliphatic polyisocyanate include ethylene diisocyanate, trimethylene diisocyanate, 1,4-tetramethylene diisocyanate, 1,5-pentamethylene diisocyanate, 1,6-hexamethylene diisocyanate, trimethyl hexamethylene diisocyanate, and 2,6-diisocyanatemethylcaproate. These may be used alone or in combination of two or more.

Further, examples of the aliphatic polyisocyanate monomer include alicyclic polyisocyanate monomers. Examples of the alicyclic polyisocyanate monomer include 1,3-cyclopentane diisocyanate, 1,3-cyclopentene diisocyanate, 1,4-cyclohexane diisocyanate, 1,3-cyclohexane diisocyanate, 3-isocyanatomethyl-3,5,5-trimethylcyclohexylisocyanate, methylenebis(cyclohexyl isocyanate), methyl-2,4-cyclohexane diisocyanate, methyl-2,6-cyclohexane diisocyanate, norbornane diisocyanate, and bis(isocyanatomethyl)cyclohexane. These may be used alone or in combination of two or more.

Examples of the aromatic polyisocyanate include tolylene diisocyanate, phenylene diisocyanate, 4,4'-diphenyl diisocyanate, 1,5-naphthalene diisocyanate, diphenylmethane diisocyanate, 4,4'-toluidine diisocyanate, and 4,4'-diphenyl ether diisocyanate. These may be used alone or in combination of two or more.

Examples of the araliphatic polyisocyanate include xylylene diisocyanate, tetramethylxylylene diisocyanate, and co,co'-diisocyanate-1,4-diethylbenzene. These may be used alone or in combination of two or more.

The polyisocyanate derivative is derived from the above-described polyisocyanate monomer. Examples of the polyisocyanate derivative include isocyanurate modified products, iminoxadiazine dione modified products, triol adducts, allophanate modified products, biuret modified products, urea modified products, oxadiazine trione modified products, carbodiimide modified products, uretodione modified products, and uretonimine modified products. These may be used alone or in combination of two or more. As the polyisocyanate derivative, preferably, an isocyanurate modified product is used.

These polyisocyanates (a) may be used alone or in combination of two or more. From the viewpoint of the curability (reactivity), the polyisocyanate (a) preferably includes the polyisocyanate derivative, and more preferably consists of the polyisocyanate derivative.

As the polyisocyanate derivative, from the viewpoint of light resistance, preferably, a polyisocyanate derivative derived from the aliphatic polyisocyanate (hereinafter, an aliphatic polyisocyanate derivative), and a polyisocyanate derivative derived from the araliphatic polyisocyanate (hereinafter, an araliphatic polyisocyanate derivative) are used.

As the polyisocyanate derivative, from the viewpoint of achieving a balance of the antibacterial properties, the storage stability, the curability, and the light resistance, more preferably, an araliphatic polyisocyanate derivative is used.

In other words, the polyisocyanate (a) preferably includes the araliphatic polyisocyanate derivative. As the araliphatic polyisocyanate derivative, preferably, a derivative of the xylylene diisocyanate is used, more preferably, an isocyanurate modified product of the xylylene diisocyanate is used.

An average number of isocyanate groups of the polyisocyanate (a) is, for example, 2 or more, preferably 2.5 or more. Further, the average number of isocyanate groups of the polyisocyanate (a) is, for example, 4 or less, preferably 3.5 or less.

The isocyanate group content (NCO%) of the polyisocyanate (a) is, for example, 5% by mass or more, preferably 7% by mass or more. Further, the isocyanate group content (NCO%) of the polyisocyanate (a) is, for example, 30% by mass or less, preferably 25% by mass or less.

(3) Antibacterial-Non-Block Capping Agent (b)

The antibacterial-non-block capping agent (b) is the raw material compound for forming the antibacterial-non-block capping group (B). The antibacterial-non-block capping agent (b) reacts with at least a portion of the isocyanate group of the above-described polyisocyanate (a), thereby forming the antibacterial-non-block capping group (B).

The antibacterial-non-block capping agent (b) includes one or more active hydrogen groups in one molecule, and one or more antibacterial groups in one molecule.

The active hydrogen group is the functional group (non-block group) bonded to the isocyanate group without desorption. Examples of the active hydrogen group include hydroxyl groups, amino groups, and mercapto groups, and preferably, a hydroxyl group is used. The number of active hydrogen groups is preferably one with respect to one molecule of antibacterial-non-block capping agent (b).

The antibacterial group is the functional group which develops the antibacterial properties. Examples of the antibacterial group include the above-described quaternary ammonium groups. The number of antibacterial groups is preferably one with respect to one molecule of antibacterial-non-block capping agent (b).

More specifically, as the antibacterial-non-block capping agent (b), a quaternary ammonium group-containing compound is used. The quaternary ammonium group-containing compound is, for example, a compound having one active hydrogen group in one molecule and one quaternary ammonium group in one molecule in combination. More specifically, examples of the quaternary ammonium group-containing compound include trialkylalkanol ammonium compounds.

Examples of the trialkylalkanol ammonium compound include choline chloride, choline bromide, choline iodide, choline acetate, choline carbonate, choline phosphate, choline hydroxide, choline citrate, choline tartrate, choline bitartrate, and choline lactate. These may be used alone or in combination of two or more.

From the viewpoint of the storage stability, preferably, choline bromide and choline acetate are used. In addition, from the viewpoint of low cost, preferably, choline chloride is used.

In the raw material component, the ratio of the antibacterial-non-block capping agent (b) is, from the viewpoint of the antibacterial properties, the water dispersibility, and the storage stability, for example, 5 mol or more, preferably 10 mol or more, more preferably 15 mol or more with respect to 100 mol of the isocyanate group of the polyisocyanate (a). In addition, the ratio of the antibacterial-non-block capping agent (b) is, from the viewpoint of the durability, for example, 80 mol or less, preferably 60 mol or less, and from the viewpoint of the water dispersibility and the storage stability, more preferably 40 mol or less, further more preferably 30 mol or less, particularly preferably 25 mol or less with respect to 100 mol of the isocyanate group of the polyisocyanate (a).

In addition, in the raw material component, the ratio of the antibacterial-non-block capping agent (b) is, from the viewpoint of the antibacterial properties, the water dispersibility, and the storage stability, for example, 2.0 parts by mass or more, preferably 4.5 parts by mass or more, more preferably 6.0 parts by mass or more with respect to 100 parts by mass of the polyisocyanate (a). In addition, the ratio of the antibacterial-non-block capping agent (b) is, from the viewpoint of the antibacterial properties, the water dispersibility, and the storage stability, for example, 20.0 parts by mass or less, preferably 15.0 parts by mass or less, more preferably 12.5 parts by mass or less with respect to 100 parts by mass of the polyisocyanate (a).

(4) Non-Antibacterial-Block Capping Agent (c)

The non-antibacterial-block capping agent (c) is the raw material compound for forming the non-antibacterial-block capping group (C). The non-antibacterial-block capping agent (c) reacts with at least a portion of the isocyanate group of the above-described polyisocyanate (a), thereby forming the non-antibacterial-block capping group (C).

The non-antibacterial block capping agent (c) is a block capping agent including one or more block groups in one molecule.

The block group is the functional group which blocks and deactivates the isocyanate group of the polyisocyanate (a). By a reaction of the block group with the isocyanate group, a latent isocyanate group is formed.

Examples of the block group include guanidine groups, imidazole groups, alcohol groups, phenol groups, active methylene groups, amine groups, imine groups, oxime groups, carbamic acid groups, urea groups, acid amide groups, acid imide groups, triazole groups, pyrazole groups, mercaptan groups, bisulfite, imidazoline groups, and pyrimidine groups. These may be used alone or in combination of two or more. The number of block groups is preferably one with respect to one molecule of antibacterial-non-block capping agent (b).

As the non-antibacterial-block capping agent (c), more specifically, a known block capping agent (except for a tertiary amine-containing compound (d1) to be described later, hereinafter, the same) is used.

More specifically, examples of the non-antibacterial-block capping agent (c) include imidazole-based compounds, alcohol-based compounds, phenol-based compounds, active methylene-based compounds, primary to secondary amine-based compounds, imine-based compounds, oxime-based compounds, carbamate-based compounds, urea-based compounds, acid amide-based compounds, acid imide-based compounds, triazol-based compounds, pyrazole-based compounds, mercaptane-based compounds, bisulfite, imidazoline-based compounds, and pyrimidine-based compounds.

Examples of the imidazole-based compound include imidazole (IMZ), benzimidazole, 2-methylimidazole, 4-methylimidazole, 2-ethylimidazole, 2-isopropylimidazole, 2,4-dimethylimidazole, 2-ethyl-4-methylimidazole, and 2-amine-imidazole.

Examples of the alcohol-based compound include methanol, ethanol, 2-propanol, n-butanol, s-butanol, 2-ethylhexyl alcohol, 1-octanol, 2-octanol, cyclohexyl alcohol, ethylene glycol, benzyl alcohol, 2,2,2-trifluoroethanol, 2,2,2-trichloroethanol, 2-(hydroxymethyl)furan, 2-methoxyethanol, methoxypropanol, 2-ethoxyethanol, n-propoxyethanol, 2-butoxyethanol, 2-ethoxyethoxyethanol, 2-ethoxybutoxyethanol, buthoxyethoxyethanol, 2-buthoxyethylethanol, 2-buthoxyethoxyethanol, N,N-dibutyl-2-hydroxyacetamide, N-hydroxysuccinimide, N-morpholineethanol, 2,2-dimethyl-1,3-dioxolane-4-methanol, 3-oxazolidineethanol, 2-hydroxymethylpyridine, furfuryl alcohol, 12-hydroxystearic acid, triphenylsilanol, and 2-hydroxyethyl methacrylate.

Examples of the phenol-based compound include phenol, cresol, ethylphenol, n-propylphenol, isopropylphenol, n-butylphenol, s-butylphenol, t-butylphenol, n-hexylphenol, 2-ethylhexylphenol, n-octylphenol, n-nonylphenol, di-n-propylphenol, diisopropylphenol, isopropylcresol, di-n-butylphenol, di-s-butylphenol, di-t-butylphenol, di-n-octylphenol, di-2-ethylhexylphenol, di-n-nonylphenol, nitrophenol, bromophenol, chlorophenol, fluorophenol, dimethylphenol, styrenated phenol, methyl salicylate, methyl 4-hydroxybenzoate, benzyl 4-hydroxybenzoate, 2-ethylhexyl hydroxybenzoate, 4-[(dimethylamino)methyl]phenol, 4-[(dimethylamino)methyl]nonylphenol, bis(4-hydroxyphenyl)acetate, 2-hydroxypyridine, 2-hydroxyquinoline, 8-hydroxyquinoline, 2-chloro-3-pyridinol, and pyridine-2-thiol.

Examples of the active methylene-based compound include Meldrum's acid, dialkyl malonate, alkyl acetoacetate, 2-acetoacetoxyethyl methacrylate, acetylacetone, and ethyl cyanoacetate. Examples of the dialkyl malonate include dimethyl malonate, diethyl malonate, din-butyl malonate, di-t-butyl malonate, di-2-ethylhexyl malonate, methyl n-butyl malonate, ethyl n-butyl malonate, methyl s-butyl malonate, ethyl s-butyl malonate, methyl t-butyl malonate, ethyl t-butyl malonate, diethyl methylmalonate, dibenzyl malonate, diphenyl malonate, benzylmethyl malonate, ethylphenyl malonate, t-butylphenyl malonate, and isopropylidene malonate. Examples of the alkyl acetoacetate include methyl acetoacetate, ethyl acetoacetate, n-propyl acetoacetate, isopropyl acetoacetate, n-butyl acetoacetate, t-butyl acetoacetate, benzyl acetoacetate, and phenyl acetoacetate.

Examples of the primary to secondary amine-based compound include dibutylamine, diphenylamine, aniline, N-methylaniline, carbazole, bis(2,2,6,6-tetramethylpiperidinyl)amine, din-propylamine, diisopropylamine (DiPA), isopropylethylamine, 2,2,4-trimethylhexamethyleneamine, 2,2,5-trimethylhexamethyleneamine, N-isopropylcyclohexylamine,

dicyclohexylamine, bis(3,5,5-trimethylcyclohexyl)amine, piperidine, 2,6-dimethylpiperidine, t-butylmethylamine, t-butylethylamine, t-butylpropylamine, t-butylbutylamine, t-butylbenzylamine, t-butylphenylamine, 2,2,6-trimethylpiperidine, 2,2,6,6-tetramethylpiperidine, (dimethylamino)-2,2,6,6-tetramethylpiperidine, 2,2,6,6-tetramethyl-4-piperidine, 6-methyl-2-piperidine, and 6-aminocaproic acid.

Examples of the imine-based compound include ethyleneimine, polyethyleneimine, and 1,4,5,6-tetrahydropyrimidine.

Examples of the oxime-based compound include formaldoxime, acetaldoxime, acetoxime, methyl ethyl ketoxime (MEKO), cyclohexanone oxime, diacetylmonoxime, benzophenoxime, 2,2,6,6-tetramethylcyclohexanone oxime, diisopropyl ketone oxime, methyl-t-butylketone oxime, diisobutyl ketone oxime, methyl isobutyl ketone oxime, methyl isopropyl ketone oxime, methyl 2,4-dimethyl pentyl ketone oxime, methyl 3-ethyl heptyl ketone oxime, methyl isoamyl ketone oxime, n-amyl ketone oxime, 2,2,4,4-tetramethyl-1,3-cyclobutanedione monoxime, 4,4'-dimethoxybenzophenone oxime, and 2-heptanone oxime.

An example of the carbamic acid-based compound includes phenyl N-phenylcarbamate.

Examples of the urea-based compound include urea, thiourea, and ethylene urea.

The acid amide-based compound is, in other words, a lactam-based compound. Examples of the acid amide-based compound include acetanilide, N-methylacetamide, acetate amide, ε-caprolactam, δ-valerolactam, γ-butyrolactam, pyrrolidone, 2,5-piperazinedione, and laurolactam.

Examples of the acid imide-based compound include succinimide, maleimide, and phthalimide.

Examples of the triazole-based compound include 1,2,4-triazole and benzotriazole.

Examples of the pyrazole-based compound include pyrazole, 3-methylpyrazole, 3-methyl-5-phenylpyrazole, 3,5-diphenylpyrazole, 4-benzyl-3,5-dimethylpyrazole, 4-nitro-3,5-dimethylpyrazole, 4-bromo-3,5-dimethylpyrazole, and 3,5-dialkylpyrazole. The 3,5-dialkylpyrazole does not have a substituent at the 4$^{th}$ position of a pyrazole ring. Examples of the 3,5-dialkylpyrazole include 3,5-dimethylpyrazole (DMP), 3,5-diisopropylpyrazole, and 3,5-di-t-butylpyrazole.

Examples of the mercaptan-based compound include butyl mercaptan, dodecyl mercaptan, and hexyl mercaptan.

An example of the bisulfite includes sodium bisulfite.

Examples of the imidazoline-based compound include 2-methylimidazoline and 2-phenylimidazoline.

An example of the pyrimidine-based compound includes 2-methyl-1,4,5,6-tetrahydropyrimidine.

Also, examples of the non-antibacterial-block capping agent (c) further include benzoxazolone, isatoic anhydride, and tetrabutylphosphonium-acetate.

These may be used alone or in combination of two or more. The non-antibacterial-block capping agent (c) preferably includes the pyrazole-based compound, and more preferably consists of the pyrazole-based compound. As the pyrazole-based compound, preferably, 3,5-diphenylpyrazole and 3,5-dialkylpyrazole are used, more preferably, 3,5-dialkylpyrazole is used, further more preferably, 3,5-dimethylpyrazole (DMP) is used.

In the raw material component, the ratio of the non-antibacterial-block capping agent (c) is, from the viewpoint of the durability, for example, 20 mol or more, preferably 40 mol or more, and from the viewpoint of the water dispersibility and the storage stability, more preferably 60 mol or more, further more preferably 70 mol or more, particularly preferably 75 mol or more with respect to 100 mol of the isocyanate group of the polyisocyanate (a). In addition, the ratio of the non-antibacterial-block capping agent (c) is, from the viewpoint of the antibacterial properties, the water dispersibility, and the storage stability, for example, 95 mol or less, preferably 90 mol or less, more preferably 85 mol or less with respect to 100 mol of the isocyanate group of the polyisocyanate (a).

In addition, in the raw material component, the ratio of the non-antibacterial-block capping agent (c) is, from the viewpoint of the antibacterial properties, the water dispersibility, and the storage stability, for example, 18.0 parts by mass or more, preferably 22.0 parts by mass or more, more preferably 25.0 parts by mass or more with respect to 100 parts by mass of the polyisocyanate (a). In addition, the ratio of the non-antibacterial-block capping agent (c) is, from the viewpoint of the antibacterial properties, the water dispersibility, and the storage stability, for example, 33.0 parts by mass or less, preferably 30.0 parts by mass or less, more preferably 27.0 parts by mass or less with respect to 100 parts by mass of the polyisocyanate (a).

(5) Antibacterial-Block Capping Group Forming Raw Material (d)

The raw material component may further include a raw material compound for forming the above-described antibacterial-block capping group (D) (hereinafter, an antibacterial-block capping group forming raw material) (d).

The antibacterial-block capping group forming raw material (d) includes, for example, a tertiary amino group-containing compound (d1) and an acid (d2).

The tertiary amino group-containing compound (d1) is a raw material compound for adding the tertiary amino group to the block isocyanate. The tertiary amino group-containing compound (d1) reacts with at least a portion of the isocyanate group of the above-described polyisocyanate (a), thereby adding the tertiary amino group to the polyisocyanate (a).

The tertiary amino group-containing compound (d1) includes, for example, one or more above-described block groups in one molecule and one or more above-described tertiary amino groups in one molecule.

More specifically, as the tertiary amino group-containing compound, a guanidine compound represented by the following general formula (1) is used.

[Chemical Formula 1]

Chem. 1

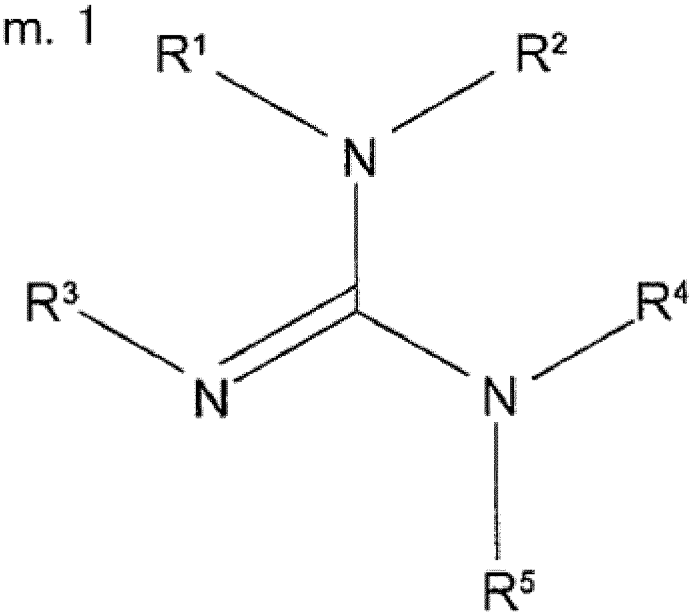

(1)

(In formula, $R^1$ to $R^5$ represent a hydrocarbon group having 1 to 12 carbon atoms or a hydrogen atom; both $R^1$ and $R^2$ represent the hydrocarbon group having 1 to 12 carbon atoms and/or both $R^4$ and $R^5$ represent the hydrocarbon group having 1 to 12 carbon atoms; $R^1$ and $R^3$ may be bonded to each other to form a heterocycle; $R^4$ and $R^1$ may be bonded to each other to form the heterocycle; and $R^5$ and $R^3$ may be bonded to each other to form the heterocycle.)

In the above-described general formula (1), $R^1$ to $R^5$ may be the same or different from each other. $R^1$ to $R^5$ represent the hydrocarbon group having 1 to 12 carbon atoms or the hydrogen atom.

Both $R^1$ and $R^2$ represent the hydrocarbon group having 1 to 12 carbon atoms and/or both $R^4$ and $R^5$ represent the hydrocarbon group having 1 to 12 carbon atoms. Thus, the guanidine compound represented by the general formula (1) includes at least one tertiary amino group.

Examples of the hydrocarbon group having 1 to 12 carbon atoms shown by $R^1$ to $R^5$ include an alkyl group having 1 to 12 carbon atoms and an aryl group having 6 to 12 carbon atoms.

Examples of the alkyl group having 1 to 12 carbon atoms include a chain alkyl group having 1 to 12 carbon atoms and a cyclic alkyl group having 3 to 12 carbon atoms.

An example of the chain alkyl group having 1 to 12 carbon atoms includes a straight chain or branched chain alkyl group having 1 to 12 carbon atoms, and examples thereof include methyl, ethyl, propyl, isopropyl, butyl, isobutyl, sec-butyl, tert-butyl, pentyl, isopentyl, tert-pentyl, hexyl, heptyl, octyl, nonyl, isononyl, decyl, undecyl, and dodecyl.

Examples of the cyclic alkyl group having 3 to 12 carbon atoms include cyclopropyl, cyclobutyl, cyclopentyl, cyclohexyl, cycloheptyl, cyclooctyl, cyclononyl, cyclodecyl, and cyclododecyl.

Examples of the aryl group having 6 to 12 carbon atoms include phenyl, tolyl, xylyl, naphthyl, azulenyl, and biphenyl.

Examples of the hydrocarbon group having 1 to 12 carbon atoms may be the same or different from each other in $R^1$ to $R^5$.

Further, $R^1$ and $R^3$ may be bonded to each other to form the heterocycle.

The heterocycle formed by bonding $R^1$ to $R^3$ is a nitrogen-containing heterocycle having - N= C- N- structure, and an example thereof includes a heterocycle of 3 to 20 membered rings, preferably, a heterocycle of 3 to 10 membered rings is used, more preferably, a heterocycle of 3 to 8 membered rings is used, further more preferably, a heterocycle of 5 to 7 membered rings is used. Further, the heterocycle may be, for example, monocyclic or polycyclic in which a plurality of monocycles share one side. Further, the heterocycle may be also a conjugated heterocycle.

Also, $R^4$ and $R^1$ may be bonded to each other to form the heterocycle. In addition, $R^5$ and $R^3$ may be bonded to each other to form the heterocycle.

Also, the heterocycle formed from $R^1$, $R^3$, $R^4$, and $R^5$ may be polycyclic in which a plurality of monocycles share the one side. The heterocycle formed in this case is the nitrogen-containing heterocycle having -N= C- N- structure. An example thereof includes a heterocycle of 6 to 20 membered rings, preferably, a heterocycle of 6 to 15 membered rings is used, more preferably, a heterocycle of 6 to 12 membered rings is used, further more preferably, a heterocycle of 10 to 12 membered rings is used. Further, the heterocycle may be the conjugated heterocycle. When $R^1$, $R^3$, $R^4$, and $R^5$ form the heterocycle, $R^2$ preferably represents the hydrogen atom. A specific example of the heterocyclic structure includes a triazabicyclo ring structure.

In the above-described general formula (1), $R^1$ to $R^5$ preferably represents a hydrocarbon group having 1 to 12 carbon atoms or a hydrogen atom, more preferably represents an alkyl group having 1 to 12 carbon atoms or a hydrogen atom, further more preferably represents a chained alkyl group having 1 to 12 carbon atoms or a hydrogen atom.

Both $R^1$ and $R^2$ represent the hydrocarbon group having 1 to 12 carbon atoms, and/or both $R^4$ and $R^5$ represent the hydrocarbon group having 1 to 12 carbon atoms.

Particularly preferably, in the above-described general formula (1), $R^1$, $R^2$, $R^4$, and $R^5$ represent the chain alkyl group having 1 to 12 carbon atoms, and $R^3$ represents the hydrogen atom.

Specific examples of the guanidine compound shown by the above-described general formula (1) include 3,3-dialkylguanidine, 1,1,3,3-tetraalkylguanidine, and 1,5,7-triazabicyclo[4.4.0]deca-5-ene.

The guanidine compound shown by the above-described general formula (1) may be used alone or in combination of two or more.

The tertiary amino group-containing compound (d1) is not limited to the above-described guanidine compound. Examples of the tertiary amino group-containing compound (d1) include the above-described guanidine compound, and in addition, N-dimethylaminoethanol (DMAE), N-methyldiethanolamine (MDEA), N-methylpiperazine (MPZ), N-methylhomopiperazine (MHPZ), 1,8-diazabicyclo[5.4.0]-7-undecene (DBU), N,N,N'-trimethylethylenediamine (TMEDA), and 1,5,7-triazabicyclo[4.4.0]deca-5-ene (TABD).

These tertiary amino group-containing compounds (d1) may be used alone or in combination of two or more. From the viewpoint of the antibacterial properties and the water dispersibility, as the tertiary amino group-containing compound (d1), preferably, a guanidine compound shown by the above-described general formula (1) is used, more preferably, 1,1,3,3-tetraalkylguanidine is used, further more preferably, 1,1,3,3-tetramethylguanidine (TMG) is used.

In the raw material component, the ratio of the tertiary amino group-containing compound (d1) is, from the viewpoint of the antibacterial properties, the water dispersibility, and the storage stability, for example, 0.1 mol or more, preferably 1 mol or more with respect to 100 mol of the isocyanate group of the polyisocyanate (a). In addition, the ratio of the tertiary amino group-containing compound (d1) is, from the viewpoint of the antibacterial properties, the water dispersibility, and the storage stability, for example, 20 mol or less, preferably 10 mol or less with respect to 100 mol of the isocyanate group of the polyisocyanate (a).

In addition, in the raw material component, the ratio of the tertiary amino group-containing compound (d1) is, from the viewpoint of the antibacterial properties, the water dispersibility, and the storage stability, for example, 0.1 parts by mass or more, preferably 1.3 parts by mass or more, more preferably 1.5 parts by mass or more with respect to 100 parts by mass of the polyisocyanate (a). In addition, the ratio of the tertiary amino group-containing compound (d1) is, from the viewpoint of the antibacterial properties, the water dispersibility, and the storage stability, for example, 15.0 parts by mass or less, preferably 12.0 parts by mass or less, more preferably 10.0 parts by mass or less with respect to 100 parts by mass of the polyisocyanate (a).

The acid (d2) is the raw material compound capable of neutralizing at least a portion of the above-described tertiary amino group and for forming a tertiary ammonium salt. The acid (d2) is not particularly limited as long as it is capable of neutralizing the above-described tertiary amino group, and an example thereof includes the above-described acid as the antibacterial-block capping group (D). As the acid (d2), preferably, an acetic acid, a propionic acid, and a lactic acid are used, more preferably, an acetic acid is used.

In the raw material component, the ratio of the acid (d2) is, for example, 0.5 equivalents or more, preferably 0.8 equivalents or more with respect to the tertiary amino group of the tertiary amino group-containing compound (d1). In addition, the ratio of the acid (d2) is, for example, 5.0 equivalents or less, preferably 3.0 equivalents or less with respect to 100 mol of the tertiary amino group of the tertiary amino group-containing compound (d1).

(6) Hydrophilic Compound (e)

The raw material component may further include a hydrophilic compound (e) for forming the above-described hydrophilic group (E).

The hydrophilic compound (e) has the active hydrogen group and the hydrophilic group. Examples of the hydrophilic compound (e) include nonionic hydrophilic compounds, and preferably, a polyoxyethylene compound is used.

The polyoxyethylene compound has at least three consecutive oxyethylene groups.

Examples of the polyoxyethylene compound include polyoxyethylene group-containing polyols, polyoxyethylene group-containing polyamines, one-end-capped polyoxyethylene glycols, and one end-capped polyoxyethylene diamines.

These polyoxyethylene compounds may be used alone or in combination of two or more.

The polyoxyethylene compound preferably includes a one end-capped polyoxyethylene glycol, more preferably includes a monoalkoxy polyoxyethylene glycol.

One end of the monoalkoxy polyoxyethylene glycol is capped with, for example, an alkyl group having 1 to 20 carbon atoms, preferably an alkyl group having 1 to 4 carbon atoms. At the other end of the monoalkoxy polyoxyethylene glycol, a hydroxyl group is located.

Examples of the monoalkoxy polyoxyethylene glycol include methoxypolyoxyethylene glycol (MeOPEG) and ethoxypolyoxyethylene glycol, and preferably, methoxypolyoxyethylene glycol is used.

In the polyoxyethylene compound, the repetition number of the oxyethylene unit is, for example, 3 or more, preferably 5 or more. Further, the repetition number of the oxyethylene unit is, for example, 100 or less, preferably 50 or less.

A number average molecular weight of the polyoxyethylene compound is, for example, 200 or more, preferably 400 or more. Further, the number average molecular weight of the polyoxyethylene compound is, for example, 2000 or less, preferably 1500 or less. The number average molecular weight of the polyoxyethylene compound can be measured by gel permeation chromatography.

In the raw material component, the ratio of the hydrophilic compound (e) is, from the viewpoint of the antibacterial properties, the water dispersibility, and the storage stability, for example, 0.1 mol or more, preferably 1 mol or more with respect to 100 mol of the isocyanate group of the polyisocyanate (a). In addition, the ratio of the hydrophilic compound (e) is, from the viewpoint of the antibacterial properties, the water dispersibility, and the storage stability, for example, 20 mol or less, preferably 10 mol or less with respect to 100 mol of the isocyanate group of the polyisocyanate (a).

In addition, in the raw material component, the ratio of the hydrophilic compound (e) is, from the viewpoint of the antibacterial properties, the water dispersibility, and the storage stability, for example, 0.1 parts by mass or more, preferably 1.0 parts by mass or more, more preferably 1.5 parts by mass or more with respect to 100 parts by mass of the polyisocyanate (a). In addition, the ratio of the hydrophilic compound (e) is, from the viewpoint of the antibacterial properties, the water dispersibilities, and the storage stability, for example, 65.0 parts by mass or less, preferably 32.0 parts by mass or less, more preferably 30.0 parts by mass or less with respect to 100 parts by mass of the polyisocyanate (a).

(7) Reaction of Raw Material Component

In the reaction of the raw material component, each of the components described above may be reacted simultaneously, or each of the components described above may be reacted sequentially.

Preferably, first, the polyisocyanate (a) and the antibacterial-non-block capping agent (b) are blended at the above-described ratio, and these are reacted (primary reaction step).

The reaction environment of the primary reaction step is, for example, an inert gas atmosphere. Examples of the inert gas include nitrogen gas and argon gas. The reaction pressure in the primary reaction step is, for example, pressurized conditions and atmospheric pressure conditions, and preferably, the atmospheric pressure conditions are used.

A reaction temperature of the primary reaction step is, for example, 40°C or more, preferably 50°C or more. Further, the reaction temperature of the primary reaction step is, for example, 100°C or less, preferably 80°C or less. The reaction time of the primary reaction step is, for example, 0.5 hours or more, preferably 1.0 hour or more. In addition, the reaction time of the primary reaction step is, for example, 24 hours or less, preferably 12 hours or less.

Progress of the reaction can be, for example, determined by adopting infrared spectroscopy or the like and confirming a disappearance or a decrease of the isocyanate group. Further, for example, by measuring the isocyanate group content by a known titration method and confirming the decrease in the isocyanate group content, it is also possible to determine the progress of the reaction.

Thus, a portion of the isocyanate group of the polyisocyanate (a) is non-reproducibly capped by the antibacterial-non-block capping agent (b). As a result, the antibacterial-non-block capping group (B) is formed. In addition, a portion of the isocyanate group of the polyisocyanate (a) (residue with respect to the above-described portion) is not capped by the antibacterial-non-block capping agent (b), and remains in a free state.

In other words, in the primary reaction step, a reaction product (primary reaction product) including the antibacterial-non-block capping group (B) and the free isocyanate group is obtained.

Next, in this method, the primary reaction product and the non-antibacterial-block capping agent (c) are blended at the above-described ratio, and these are reacted (secondary reaction step).

The reaction environment of the secondary reaction step is, for example, the inert gas atmosphere. Examples of

the inert gas include nitrogen gas and argon gas. The reaction pressure of the secondary reaction step is, for example, the pressurized conditions and the atmospheric pressure conditions, and preferably, the atmospheric pressure conditions are used.

The reaction temperature of the secondary reaction step is, for example, 0°C or more, preferably 20°C or more. Further, the reaction temperature of the secondary reaction step is, for example, 80°C or less, preferably 60°C or less. The reaction time of the secondary reaction step is, for example, 0.5 hours or more, preferably 1.0 hour or more. In addition, the reaction time of the secondary reaction step is, for example, 24 hours or less, preferably 12 hours or less.

The completion of the reaction can be, for example, determined by adopting the infrared spectroscopy or the like and confirming the disappearance or the decrease of the isocyanate group.

Thus, the free isocyanate group of the primary reaction product is reproducibly capped by the non-antibacterial-block capping agent (c). As a result, the non-antibacterial-block capping group (C) is formed.

Then, in the primary reaction step and the secondary reaction step described above, the isocyanate group of the polyisocyanate (a) is capped by the antibacterial-non-block capping group (B) and the non-antibacterial-block capping group (C). As a result, the capped residue (A) of the polyisocyanate is formed.

In other words, in the secondary reaction step, a block isocyanate (secondary reaction product) including the capped residue (A) of the polyisocyanate, the antibacterial-non-block capping group (B), and the non-antibacterial-block capping group (C) is obtained.

Such a block isocyanate includes the capped residue (A) of the polyisocyanate, the antibacterial-non-block capping group (B), and the non-antibacterial-block capping group (C). Then, the antibacterial-non-block capping group (B) includes the quaternary ammonium group. Therefore, the above-described block isocyanate has the excellent antibacterial properties, and can be fixed in the resin at a relatively high degree of freedom.

(8) Quaternized Treatment

In the above-described method, the antibacterial-non-block capping group (B) is formed by reacting the polyisocyanate (a) with the antibacterial-non-block capping agent (b). Alternatively, for example, the antibacterial-non-block capping group (B) may be also formed without using the antibacterial-non-block capping agent (b).

More specifically, the antibacterial-non-block capping group (B) may be also formed without using the quaternary ammonium group-containing compound, and for example, by using the tertiary amino group-containing compound, and by subjecting the tertiary amino group to the quaternized treatment.

In such a case, for example, in the above-described primary reaction step, the tertiary amine-containing compound (b 1) is blended instead of the antibacterial-non-block capping agent (b) (for example, a quaternary ammonium group-containing compound), and these are reacted (primary reaction step).

An example of the tertiary amine-containing compound (b 1) includes the above-described tertiary amine-containing compound as the antibacterial-block capping group forming raw material. These may be used alone or in combination of two or more.

A mixing ratio of the tertiary amine-containing compound (d1) is in conformity with the mixing ratio of the above-described antibacterial-non-block capping agent (b). In addition, the reaction conditions in the primary reaction step are the same as those described above. Thus, a reaction product (primary reaction product) including the tertiary amino group and the free isocyanate group is obtained.

Next, in this method, the primary reaction product and the antibacterial-block capping agent (c) are mixed at the above-described ratio, and these are reacted in the same manner as the description above (secondary reaction step). Thus, a reaction product (secondary reaction product) including the capped residue (A) of the polyisocyanate, the non-antibacterial-block capping group (C), and the tertiary amino group is obtained.

Thereafter, in this method, the tertiary amino group of the secondary reaction product is subjected to the quaternized treatment by a known method (quaternized treatment step).

In the quaternized treatment step, for example, the tertiary amino group and a quaternized agent (b2) are reacted. Examples of the quaternized agent (b2) include methyl chloride, allyl chloride, benzyl chloride, dimethyl sulfate, dimethyl carbonate, propylene oxide, butylene oxide, styrene oxide, epibromohydrin, ethylene chlorohydrin, 3-chloro-1,2-propanediol, 3-chloro-2-hydroxypropyltrimethylammonium chloride, glycidyltrimethylammonium chloride, glycidol, butyl glycidyl ether, allyl glycidyl ether, and glycidyl methacrylate. These may be used alone or in combination of two or more. As the quaternized agent (b2), preferably, methyl chloride is used.

The ratio of the quaternized agent (b2) is, for example, 0.5 equivalents or more, preferably 0.8 equivalents or more with respect to the tertiary amino group of the tertiary amino group-containing compound (b1). Further, the ratio of the quaternized agent (b2) is, for example, 5.0 equivalents or less, preferably 3.0 equivalents or less with respect to 100 mol of the tertiary amino group of the tertiary amino group-containing compound (b1).

The reaction environment of the quaternized treatment step is, for example, the inert gas atmosphere. Examples of the inert gas include nitrogen gas and argon gas. The reaction pressure of the quaternized treatment step is, for

example, the pressurized conditions and the atmospheric pressure conditions, and preferably, the atmospheric pressure conditions are used.

The reaction temperature of the quaternized treatment step is, for example, 0°C or more, preferably 20°C or more. Further, the reaction temperature of the quaternized treatment step is, for example, 80°C or less, preferably 60°C or less. The reaction time of the quaternized treatment step is, for example, 0.5 hours or more, preferably 1.0 hour or more. In addition, the reaction time of the quaternized treatment step is, for example, 24 hours or less, preferably 12 hours or less.

Thus, the tertiary amino group is quaternized, thereby forming the quaternary ammonium group (antibacterial-non-block capping group (B)). As a result, a block isocyanate (quaternized treatment product) including the capped residue (A) of the polyisocyanate, the antibacterial-non-block capping group (B), and the non-antibacterial-block capping group (C) is obtained.

The quaternized treatment product also includes the capped residue (A) of the polyisocyanate, the antibacterial-non-block capping group (B), and the non-antibacterial-block capping group (C). Then, the antibacterial-non-block capping group (B) includes the quaternary ammonium group. Therefore, the above-described block isocyanate has the excellent antibacterial properties, and can be fixed in the resin at the relatively high degree of freedom.

On the other hand, from the viewpoint of obtaining the particularly excellent antibacterial properties, preferably, the block isocyanate which is not subjected to the quaternized treatment is used, and more specifically, a reaction product of the raw material component including the polyisocyanate (a), the antibacterial-non-block capping agent (b), and the non-antibacterial-block capping agent (c) is used.

(9) Reaction of Antibacterial-Block Capping Group Forming Raw Material (d)

The raw material component may include the antibacterial-block capping group forming raw material (d). In such a case, if necessary, in the primary reaction step and/or the secondary reaction step, the tertiary amino group-containing compound (d1) is blended at the above-described ratio. Preferably, in the secondary reaction step, along with the non-antibacterial-block capping agent (c), the tertiary amino group-containing compound (d1) is blended at the above-described ratio.

In the secondary reaction step, when the tertiary amino group-containing compound (d1) is blended, at least a portion of the free isocyanate group of the primary reaction product is reproducibly capped by the non-antibacterial-block capping agent (c). Further, at least a portion of the free isocyanate group of the primary reaction product is capped by the tertiary amino group-containing compound (d1).

As a result, a secondary reaction product containing the non-antibacterial-block capping group (C) derived from the non-antibacterial-block capping agent (c), and the tertiary amino group derived from the tertiary amino group-containing compound (d1) is obtained.

Then, in such a case, after the above-described secondary reaction step, the acid (d2) is blended with respect to the secondary reaction product at the above-described ratio, and these are reacted. Thus, at least a portion of the tertiary amino group is neutralized with the acid, thereby forming a tertiary ammonium salt (neutralization step).

The reaction environment of the neutralization step is, for example, the inert gas atmosphere. Examples of the inert gas include nitrogen gas and argon gas. The reaction pressure of the neutralization step is, for example, the pressurized conditions and the atmospheric pressure conditions, and preferably, the atmospheric pressure conditions are used.

The reaction temperature of the neutralization step is, for example, 0°C or more, preferably 20°C or more. Further, the reaction temperature of the neutralization step is, for example, 80°C or less, preferably 60°C or less. The reaction time of the neutralization step is, for example, 0.5 hours or more, preferably 1.0 hour or more. Further, the reaction time of the neutralization step is, for example, 24 hours or less, preferably 12 hours or less.

Thus, the tertiary amino group is neutralized by the acid, thereby forming the antibacterial-block capping group (D) including the tertiary ammonium salt.

In other words, in the above-described method, a block isocyanate (neutralization reaction product) including the capped residue (A) of the polyisocyanate, the antibacterial-non-block capping group (B), the non-antibacterial-block capping group (C), and the antibacterial-block capping group (D) is obtained.

Such a block isocyanate includes the capped residue (A) of the polyisocyanate, the antibacterial-non-block capping group (B), and the non-antibacterial-block capping group (C), and further includes the antibacterial-block capping group (D). Therefore, such a block isocyanate has the particularly excellent antibacterial properties and curability.

(10) Reaction of Hydrophilic Compound (e)

The raw material component may include the hydrophilic compound (e). In such a case, if necessary, in the primary reaction step and/or the secondary reaction step, the hydrophilic compound (e) is blended at the above-described ratio. Preferably, in the primary reaction step, along with the antibacterial-non-block capping agent (b), the hydrophilic

compound (e) is blended at the above-described ratio.

In the primary reaction step, when the hydrophilic compound (e) is blended, at least a portion of the free isocyanate group of the polyisocyanate compound (a) is non-reproducibly capped by the antibacterial-non-block capping agent (b). In addition, at least a portion of the free isocyanate group of the polyisocyanate compound (a) is non-reproducibly capped by the hydrophilic compound (e).

As a result, a primary reaction product including the antibacterial-non-block capping group (B) derived from the antibacterial-non-block capping agent (b), and the hydrophilic group (E) derived from the hydrophilic compound (e) is obtained.

Thereafter, as described above, the primary reaction product and the non-antibacterial-block capping agent (c) are reacted, thereby obtaining a secondary reaction product (secondary reaction step).

Thus, a block isocyanate (secondary reaction product) including the capped residue (A) of the polyisocyanate, the antibacterial-non-block capping group (B), the non-antibacterial-block capping group (C), and the hydrophilic group (E) is obtained.

The block isocyanate includes the capped residue (A) of the polyisocyanate, the antibacterial-non-block capping group (B), and the non-antibacterial-block capping group (C), and further includes the hydrophilic group (E). Therefore, such a block isocyanate has the particularly excellent water dispersibility.

(11) Reaction of Antibacterial-Block Capping Group Forming Raw Material (d) and Hydrophilic Compound (e)

The raw material component may include the antibacterial-block capping group forming raw material (d) and the hydrophilic compound (e). In such a case, preferably, in the primary reaction step, along with the antibacterial-non-block capping agent (b), the hydrophilic compound (e) is blended at the above-described ratio. Further, preferably, in the secondary reaction step, along with the non-antibacterial-block capping agent (c), the tertiary amino group-containing compound (d1) is blended at the above-described ratio. Also, as described above, the secondary reaction product is neutralized with the acid (d2).

Thus, a block isocyanate (neutralization reaction product) including the capped residue (A) of the polyisocyanate, the antibacterial-non-block capping group (B), the non-antibacterial-block capping group (C), the antibacterial-block capping group (D), and the hydrophilic group (E) is obtained.

Such a block isocyanate includes the capped residue (A) of the polyisocyanate, the antibacterial-non-block capping group (B), and the non-antibacterial-block capping group (C), and further includes the antibacterial-block capping group (D) and the hydrophilic group (E). Therefore, such a block isocyanate has the particularly excellent antibacterial properties, curability, and water dispersibility.

In the block isocyanate, the free isocyanate group (free-isocyanate group) content derived from the polyisocyanate (a) is substantially 0.

That is, any free isocyanate groups derived from the polyisocyanate (a) are reacted with either the antibacterial-non-block capping agent (b) or the non-antibacterial-block capping agent (c) (further, if necessary, the antibacterial-block capping group forming raw material (d) and the hydrophilic compound (e)).

More specifically, all of the free isocyanate groups derived from the polyisocyanate (a) are preferably reacted with either the antibacterial-non-block capping agent (b) and the non-antibacterial-block capping agent (c). Thus, all of the free isocyanate groups (free-isocyanate groups) derived from the polyisocyanate (a) are capped. The obtained block isocyanate includes the capped residue (A) of the polyisocyanate, the antibacterial-non-block capping group (B), and the non-antibacterial-block capping group (C).

In addition, all of the free isocyanate groups derived from the polyisocyanate (a) are preferably reacted with any of the antibacterial-non-block capping agent (b), the non-antibacterial-block capping agent (c), and the antibacterial-block capping group forming raw material (d). Thus, all of the free isocyanate groups (free-isocyanate groups) derived from the polyisocyanate (a) are capped. The obtained block isocyanate includes the capped residue (A) of the polyisocyanate, the antibacterial-non-block capping group (B), and the non-antibacterial-block capping group (C), and further includes the antibacterial-block capping group (D).

In addition, all of the free isocyanate groups derived from the polyisocyanate (a) are preferably reacted with any of the antibacterial-non-block capping agent (b), the non-antibacterial-block capping agent (c), the antibacterial-block capping group forming raw material (d), and the hydrophilic compound (e). Thus, all of the free isocyanate groups (free-isocyanate groups) derived from the polyisocyanate (a) are capped. The obtained block isocyanate includes the capped residue (A) of the polyisocyanate, the antibacterial-non-block capping group (B), and the non-antibacterial-block capping group (C), and further includes the antibacterial-block capping group (D) and the hydrophilic group (E).

(12) Other Embodiments

A reaction order of the raw material component is not limited to the description above. That is, the polyisocyanate

(a), the antibacterial-non-block capping agent (b), and the non-antibacterial-block capping agent (c) can be reacted in the arbitrary order. Further, the antibacterial-block capping group forming raw material (d) and/or the hydrophilic compound (e) may be blended at the arbitrary timing to be reacted.

In addition, all of the above-described reactions may be under solvent-free, and may be, for example, in the presence of an organic solvent. Examples of the organic solvent include ketones, nitriles, aliphatic hydrocarbons, alicyclic hydrocarbons, aromatic hydrocarbons, glycol ether esters, ethers, halogenated aliphatic hydrocarbons, and polar aprotons. These organic solvents may be used alone or in combination of two or more.

For example, when the block isocyanate is not subjected to the quaternized treatment, that is, when the polyisocyanate (a), the antibacterial-non-block capping agent (b) including the quaternary ammonium group-containing compound, and the non-antibacterial-block capping agent (c) are reacted, these are preferably reacted in the presence of the organic solvent. As the organic solvent, a hydrophilic solvent capable of dissolving the quaternary ammonium group-containing compound is used. Examples of the hydrophilic solvent include nitriles (for example, acetonitrile and propionitrile), and polar aprotons (for example, acetone, N-methylpyrrolidone, dimethylformamide, N,N'-dimethylacetamide, dimethylsulfoxide, and hexamethylphosphonylamide).

In any of the above-described reactions, when the organic solvent is blended, for example, a solution of the block isocyanate is obtained. In such a case, for example, water is added to the block isocyanate solution and/or a block isocyanate dispersion liquid to emulsify the block isocyanate, and further, by heating the emulsified liquid under reduced pressure, the above-described organic reactions can be removed. Thus, an aqueous dispersion liquid of the block isocyanate is obtained.

The solid concentration of the block isocyanate of the solution and/or aqueous dispersion liquid is, for example, 1% by mass or more, preferably 10% by mass or more. In addition, the solid concentration of the block isocyanate of the solution and/or the aqueous dispersion liquid is, for example, 80% by mass or less, preferably 50% by mass or less.

3. Antibacterial Agent

The antibacterial agent only needs to include the above-described block isocyanate. For example, the antibacterial agent may be the solid made of the block isocyanate. Further, the antibacterial agent may be the solution and/or the aqueous dispersion liquid of the block isocyanate.

Further, the antibacterial agent may also include an additive. Examples of the additive include solvents, catalysts, epoxy resins, coating property improvers, leveling agents, defoaming agents, antioxidants, ultraviolet absorbers, thickeners, anti-settling agents, plasticizers, surfactants, pigments, fillers, organic fine particles, inorganic fine particles, and antifungal agents. The mixing amount of the additive is appropriately determined in accordance with its purpose and use.

Further, the antibacterial agent may also include another isocyanate component in addition to the above-described block isocyanate (block isocyanate including the capped residue (A) of the polyisocyanate, the antibacterial-non-block capping group (B), and the non-antibacterial-block capping group (C)). An example of the other isocyanate component includes isocyanate without including the antibacterial-non-block capping group (B) and/or the non-antibacterial-block capping group (C). The content ratio of the other isocyanate component is not particularly limited, and is appropriately set in accordance with its purpose and use.

In addition, the above-described antibacterial agent may be used in combination with a known antibacterial agent. In other words, it is possible to mix the above-described antibacterial agent with the other antibacterial agent. The mixing ratio is appropriately determined in accordance with its purpose and use.

4. Function and Effect

The above-described antibacterial agent includes the block isocyanate. The block isocyanate includes the capped residue (A) of the polyisocyanate, the antibacterial-non-block capping group (B), and the non-antibacterial-block capping group (C). Then, the antibacterial-non-block capping group (B) includes the quaternary ammonium group. Therefore, the above-described antibacterial agent has the excellent antibacterial properties, and can be fixed in the resin at the relatively high degree of freedom.

5. Resin

(1) Curing Agent

In the following, a method for fixing the antibacterial agent in the resin (object to be fixed) is described in detail. When the antibacterial agent is fixed in the resin, the antibacterial agent is preferably also used as a curing agent.

Average functionality of the isocyanate group (including the free isocyanate group and the latent isocyanate

group) of the curing agent is, for example, 2 or more, preferably 2.5 or more. Further, the average functionality of the isocyanate group (including the free isocyanate group and the latent isocyanate group) of the curing agent is, for example, 4 or less, preferably 3.5 or less.

More specifically, in this method, a main agent which is capable of reacting with the free isocyanate group, and the antibacterial agent as the curing agent are mixed, thereby obtaining a resin composition. Next, the resin composition is heated and the latent isocyanate group of the antibacterial agent is deblocked without dissociating at least a portion of the tertiary ammonium salt, thereby obtaining the free isocyanate group. Then, the free isocyanate group is reacted with the main agent. Thus, a resin in which the antibacterial agent is fixed in a molecule can be obtained. Examples of the resin include polyurethane resins, polyester resins, and acrylic resins, and preferably, a polyurethane resin is used.

(2) Main Agent

The main agent is a component which is capable of reacting with the free isocyanate group obtained by deblocking of the latent isocyanate group, and capable of forming the resin. For example, when the resin is the polyurethane resin, as the main agent, an active hydrogen group-containing compound is used. The active hydrogen group-containing compound is a compound containing one or more active hydrogen groups in the molecule. Examples of the active hydrogen group-containing compound include polyol compounds and polyamine compounds. As the active hydrogen group-containing compound, preferably, a polyol compound is used.

Examples of the polyol compound include low molecular weight polyols and high molecular weight polyols.

The number average molecular weight of the low molecular weight polyol is, for example, below 300, preferably below 400. The low molecular weight polyol has two or more hydroxyl groups.

Examples of the low molecular weight polyol include dihydric alcohol, trihydric alcohol, tetrahydric alcohol, pentahydric alcohol, hexahydric alcohol, heptahydric alcohol, and octahydric alcohol. Examples of the dihydric alcohol include ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylolheptane, alkane (C7 to C20) diol, 1,3-cyclohexanedimethanol, 1,4-cyclohexanedimethanol, 1,3-cyclohexanediol, 1,4-cyclohexanediol, hydrogenated bisphenol A, 1,4-dihydroxy-2-butene, 2,6-dimethyl-1-octen-3,8-diol, bisphenol A, diethylene glycol, triethylene glycol, and dipropylene glycol. Examples of the trihydric alcohol include glycerin, trimethylolpropane, and triisopropanolamine. Examples of the tetrahydric alcohol include tetramethylol methane (pentaerythritol) and diglycerin. An example of the pentahydric alcohol includes xylitol. Examples of the hexahydric alcohol include sorbitol, mannitol, allitol, iditol, dulcitol, altritol, inositol, and dipentaerythritol. An example of the heptahydric alcohol includes perseitol. An example of the octahydric alcohol includes sucrose. These low molecular weight polyols may be used alone or in combination of two or more.

The number average molecular weight of the high molecular weight polyol is, for example, 300 or more, preferably 400 or more, more preferably 500 or more. The high molecular weight polyol has 2 or more hydroxyl groups.

Examples of the high molecular weight polyol include polyether polyols, polyester polyols, polycarbonate polyols, polyurethane polyols, epoxy polyols, vegetable oil polyols, polyolefin polyols, acrylic polyols, vinyl monomer-modified polyols, and fluorine-containing polyols.

Examples of the polyether polyol include polyoxyalkylene (C2 to C3) polyols and polytetramethylene ether polyols.

Examples of the polyester polyol include adipic acid-based polyester polyols, phthalic acid-based polyester polyols, and lactone-based polyester polyols.

Examples of the polycarbonate polyol include a ring-opening polymer of ethylene carbonate using the above-described low molecular weight polyol as an initiator, and an amorphous polycarbonate polyol obtained by copolymerizing the above-described dihydric alcohol and the ring-opening polymer.

Examples of the polyurethane polyol include polyester polyurethane polyols, polyether polyurethane polyols, polycarbonate polyurethane polyols, and polyester polyether polyurethane polyols.

An example of the epoxy polyol includes an epoxy polyol obtained by a reaction of the above-described low molecular weight polyol with a polyfunctional halohydrin.

Examples of the vegetable oil polyol include castor oil, coconut oil, and ester-modified castor oil polyols.

Examples of the polyolefin polyol include polybutadiene polyols and partially saponified ethylene-vinyl acetate copolymers.

An example of the acrylic polyol includes a copolymer of a hydroxyl group-containing acrylate and a copolymerizable vinyl monomer which is copolymerizable with the hydroxyl group-containing acrylate.

The vinyl monomer-modified polyol is obtained by the reaction of the above-described high molecular weight polyol with a vinyl monomer.

An example of the fluorine-containing polyol includes an acrylic polyol in which a fluorine compound is blended as the copolymerizable vinyl monomer in the above-described copolymerization of the acrylic polyol.

These high molecular weight polyols may be used alone or in combination of two or more.

These polyol compounds may be used alone or in combination of two or more.

Of the polyol compounds, preferably, a high molecular weight polyol is used, more preferably, a polyurethane polyol and an acrylic polyol are used.

The main agent may contain the additive. Examples of the additive include reaction solvents, catalysts, epoxy resins, coating property improvers, leveling agents, defoaming agents, antioxidants, ultraviolet absorbers, thickeners, anti-settling agents, plasticizers, surfactants, pigments, fillers, organic fine particles, inorganic fine particles, and antifungal agents. The mixing amount of the additive is appropriately determined in accordance with its purpose and use.

(3) Resin Composition

In a production of the resin composition, the above-described main agent and the antibacterial agent as the curing agent are blended. The mixing ratio is appropriately set in accordance with its purpose and use. For example, an equivalent ratio (latent isocyanate group/active hydrogen group) of the latent isocyanate group of the antibacterial agent to the active hydrogen group of the main agent (active hydrogen group-containing compound) is, for example, 0.1 or more, preferably 0.5 or more, more preferably 0.8 or more. Further, the equivalent ratio (latent isocyanate group/active hydrogen group) of the latent isocyanate group of the antibacterial agent to the active hydrogen group of the main agent (active hydrogen group-containing compound) is, for example, 5 or less, preferably 3 or less, more preferably 1.2 or less.

Then, the resin composition is coated on an object by a known coating method to be dried, thereby forming a coating film. Thereafter, the coating film is heated and if necessary, matured.

A heating temperature and heating time are set so that a block agent can be dissociated from the latent isocyanate group.

The heating temperature is, for example, 50°C or more, preferably 80°C or more. Further, the heating temperature is, for example, 180°C or less, preferably 150°C or less. The heating time is, for example, 10 seconds or more, preferably 30 seconds or more. Further, the heating time is, for example, 10 minutes or less, preferably 5 minutes or less.

Thus, the latent isocyanate group (non-antibacterial-block capping group (C)) of the antibacterial agent is deblocked, and the free isocyanate group is reproduced. Then, the free isocyanate group of the antibacterial agent and the main agent are reacted with each other, thereby obtaining a cured product of the resin.

On the other hand, the quaternary ammonium group (the antibacterial-non-block capping group (B)) remains in the antibacterial agent. In addition, when the antibacterial agent includes the tertiary ammonium salt (antibacterial-block capping group (D)), at least a portion of the tertiary ammonium salt remains in the antibacterial agent.

Therefore, by the above-described reaction, the quaternary ammonium group (and the tertiary ammonium salt) in the antibacterial agent is fixed in the resin. As a result, it is possible to obtain the resin (cured product) having the excellent antibacterial properties.

Furthermore, when the antibacterial agent is blended so as to be excessive, the excessive antibacterial agent is included in the resin (cured product) without reacting with the main agent. As a result, it is possible to obtain the particularly excellent antibacterial properties due to the excessive antibacterial agent.

Examples of the use for the resin composition (uncured product) and the resin (cured product) include fiber treatment agents, water repellents, coating compositions, adhesives, antistatic agents, papermaking treatment agents, wet paper enhancers, receiving layers of recording media, electrodeposition coating compositions, antibacterial-antivirus compositions, encapsulated compositions, optical members, and latex compositions. Of the use of the resin composition (uncured product) and the resin (cured product), preferably, a fiber treatment agent, a water repellent, a coating composition, and an adhesive are used, more preferably, a fiber treatment agent and a water repellent are used.

In the above-described description, the resin (cured product) having the excellent antibacterial properties is formed by reacting the main agent with the antibacterial agent as the curing agent. However, the main agent and the antibacterial agent may not react. In this case, the antibacterial agent is contained in a dried product of the main agent and/or the cured product of the main agent. Therefore, the resin (cured product) having the excellent antibacterial properties is formed.

Further, it is also possible to cure the antibacterial agent alone. For example, by coating the antibacterial agent onto a substrate or impregnating the antibacterial agent therewith, and dissociating the block agent from the latent isocyanate group, the antibacterial agent can be self-cross-linked to be cured. In addition, for example, when the substrate has the active hydrogen group, it is also possible to react the substrate with the antibacterial agent, and fix the antibacterial agent to the substrate.

Examples

Next, the present invention is further described based on Examples below. The present invention is however not

limited by Examples. The specific numerical values in mixing ratio (content ratio), property value, and parameter used in the following description can be replaced with upper limit values (numerical values defined as "or less" or "below") or lower limit values (numerical values defined as "or more" or "above") of corresponding numerical values in mixing ratio (content ratio), property value, and parameter described in the above-described "DESCRIPTION OF EMBODIMENTS". All designations of "part" or "parts" and "%" mean part or parts by mass and % by mass, respectively, unless otherwise particularly specified.

Example 1

At room temperature (25°C), 50 parts by mass of an isocyanurate derivative of the xylylene diisocyanate (XDI) (polyisocyanate compound, trade name: "TAKENATE D-131N", solid content of 75% by mass, isocyanate group content of 13.7%, manufactured by Mitsui Chemicals, Inc.) and the acetonitrile (solvent) were charged in a reaction vessel of a volume of 500 mL equipped with a stirrer, a thermometer, a cooling tube, and a nitrogen gas introduction tube.

Next, the choline chloride was added to the reaction vessel. An addition ratio of the choline chloride was a mole number shown in Tables 1 to 4 with respect to 100 mol of the isocyanate group provided in the isocyanurate derivative of XDI.

Then, the temperature of the content of the reaction vessel was increased to 75°C with a mantle heater, and the isocyanurate derivative of XDI was reacted with the choline chloride. The isocyanate group concentration was measured to confirm that a portion of the isocyanate group was capped by the choline chloride.

Next, the 3,5-dimethylpyrazole (DMP) was added to the reaction vessel. The addition ratio of DMP was the mole number shown in Tables 1 to 4 with respect to 100 mol of the isocyanate group provided in the isocyanurate derivative of XDI.

Thereafter, by measuring an FT-IR spectrum of a reaction solution, it was confirmed that the residue of the isocyanate group was blocked by DMP, thereby forming the block isocyanate group. Thus, a reaction solution containing the block isocyanate was obtained. The block isocyanate included the quaternary ammonium group derived from the choline chloride, and had the excellent water dispersibility.

Thereafter, 150 parts by mass of the water was added to 50 parts by mass of the reaction solution containing the block isocyanate. Thereafter, the reaction solution and the water were emulsified by stirring with a homomixer. Next, the solvent was distilled off from an emulsion liquid, and a portion of the water was distilled off under reduced pressure conditions.

Thus, an aqueous dispersion liquid of the block isocyanate was obtained as the antibacterial agent. The solid concentration of the block isocyanate of the aqueous dispersion liquid was 20% by mass.

Examples 2 to 17

Formulations were changed to those described in Tables 1 to 4. An aqueous dispersion liquid of the block isocyanate was obtained as the antibacterial agent in the same manner as Example 1 except for this.

Example 18

At room temperature (25°C), 50 parts by mass of the isocyanurate derivative of the xylylene diisocyanate (XDI) (polyisocyanate compound, trade name: "TAKENATE D-131N", solid content of 75% by mass, isocyanate group content of 13.7%, manufactured by Mitsui Chemicals, Inc.) and the acetonitrile (solvent) were charged in the reaction vessel of the volume of 500 mL equipped with the stirrer, the thermometer, the cooling tube, and the nitrogen gas introduction tube.

Next, the choline chloride and the methoxy polyoxyethylene glycol (MeOPEG, methoxy PEG1000, hydrophilic compound) were added to the reaction vessel. The addition ratio of the choline chloride was the mole number shown in Tables 1 to 4 with respect to 100 mol of the isocyanate group provided in the isocyanurate derivative of XDI. Further, the addition ratio of the methoxy polyoxyethylene glycol was the mole number shown in Tables 1 to 4 with respect to 100 mol of the isocyanate group provided in the isocyanurate derivative of XDI.

Then, the temperature of the content of the reaction vessel was increased to 75°C with the mantle heater, and the isocyanurate derivative of XDI was reacted with the choline chloride and the methoxy polyoxyethylene glycol. The isocyanate group concentration was measured to confirm that the isocyanurate derivative of XDI was modified by the methoxy polyoxyethylene glycol (hydrophilic compound). Further, by measuring the isocyanate group concentration, it was confirmed that a portion of the isocyanate group was capped by the choline chloride.

Next, the 3,5-dimethylpyrazole (DMP) was added to the reaction vessel. The addition ratio of DMP was the mole number shown in Tables 1 to 4 with respect to 100 mol of the isocyanate group provided in the isocyanurate derivative of XDI.

Thereafter, by measuring the FT-IR spectrum of the reaction solution, it was confirmed that the residue of the

isocyanate group was blocked by DMP, thereby forming the block isocyanate group. Thus, a reaction solution containing the block isocyanate was obtained. The block isocyanate included the quaternary ammonium group derived from the choline chloride and the oxyethylene group derived from the methoxy polyoxyethylene glycol (hydrophilic compound), and had the excellent water dispersibility.

Thereafter, 150 parts by mass of the water was added to 50 parts by mass of the reaction solution containing the block isocyanate. Thereafter, the reaction solution and the water were emulsified by stirring with the homomixer. Next, the solvent was distilled off from the emulsion liquid, and a portion of the water was distilled off under the reduced pressure conditions.

Thus, as the antibacterial agent, an aqueous dispersion liquid of the block isocyanate was obtained. The solid concentration of the block isocyanate of the aqueous dispersion liquid was 20% by mass.

Example 19

At room temperature (25°C), 50 parts by mass of the isocyanurate derivative of the xylylene diisocyanate (XDI) (polyisocyanate compound, trade name: "TAKENATE D-131N", solid content of 75% by mass, isocyanate group content of 13.7%, manufactured by Mitsui Chemicals, Inc.) and the acetonitrile (solvent) were charged in the reaction vessel of the volume of 500 mL equipped with the stirrer, the thermometer, the cooling tube, and the nitrogen gas introduction tube.

Next, the choline chloride was added to the reaction vessel. The addition ratio of the choline chloride was the mole number shown in Tables 1 to 4 with respect to 100 mol of the isocyanate group provided in the isocyanurate derivative of XDI.

Then, the temperature of the content of the reaction vessel was increased to 75°C with the mantle heater, and the isocyanurate derivative of XDI was reacted with the choline chloride. The isocyanate group concentration was measured to confirm that a portion of the isocyanate group was capped by the choline chloride.

Next, the 3,5-dimethylpyrazole (DMP) was added to the reaction vessel. The addition ratio of DMP was the mole number shown in Tables 1 to 4 with respect to 100 mol of the isocyanate group provided in the isocyanurate derivative of XDI.

Further, the 1,1,3,3-tetramethylguanidine (TMG) was added to the reaction vessel. The addition ratio of TMG was the mole number shown in Tables 1 to 4 with respect to 100 mol of the isocyanate group provided in the isocyanurate derivative of XDI.

Thereafter, by measuring the FT-IR spectrum of the reaction solution, it was confirmed that the residue of the isocyanate group was blocked by DMP. Further, it was confirmed that the residue of the isocyanate group was partially capped by TMG.

Then, the acetic acid was added to the reaction solution and stirred. The addition ratio of the acetic acid was the mole number shown in Tables 1 to 4 with respect to 1 mol of the used TMG. Thus, the tertiary amino group derived from TMG was neutralized with the acetic acid, thereby forming the tertiary ammonium salt (ammonium acetate salt).

Thus, a reaction solution containing the block isocyanate was obtained. The block isocyanate included the quaternary ammonium group derived from the choline chloride and the tertiary ammonium salt (ammonium acetate salt) derived from TMG and the acetic acid, and had the excellent water dispersibility.

Thereafter, 150 parts by mass of the water was added to 50 parts by mass of the reaction solution containing the block isocyanate. Thereafter, the reaction solution and the water were emulsified by stirring with the homomixer. Next, the solvent was distilled off from the emulsion liquid, and a portion of the water was distilled off under the reduced pressure conditions.

Thus, as the antibacterial agent, an aqueous dispersion liquid of the block isocyanate was obtained. The solid concentration of the block isocyanate of the aqueous dispersion liquid was 20% by mass.

Example 20

At room temperature (25°C), 50 parts by mass of the isocyanurate derivative of the xylylene diisocyanate (XDI) (polyisocyanate compound, trade name: "TAKENATE D-131N", solid content of 75% by mass, isocyanate group content of 13.7%, manufactured by Mitsui Chemicals, Inc.) and the acetonitrile (solvent) were charged in the reaction vessel of the volume of 500 mL equipped with the stirrer, the thermometer, the cooling tube, and the nitrogen gas introduction tube.

Next, the choline chloride and the methoxy polyoxyethylene glycol (methoxy polyethylene glycol, methoxy PEG1000, hydrophilic compound) were added to the reaction vessel. The addition ratio of the choline chloride was the mole number shown in Tables 1 to 4 with respect to 100 mol of the isocyanate group provided in the isocyanurate derivative of XDI. Further, the addition ratio of the methoxy polyoxyethylene glycol was the mole number shown in Tables 1 to 4 with respect to 100 mol of the isocyanate group provided in the isocyanurate derivative of XDI.

Then, the temperature of the content of the reaction vessel was increased to 75°C with the mantle heater, and the isocyanurate derivative of XDI was reacted with the choline chloride and the methoxy polyoxyethylene glycol. The

isocyanate group concentration was measured to confirm that the isocyanurate derivative of XDI was modified by the methoxy polyoxyethylene glycol (hydrophilic compound). Further, by measuring the isocyanate group concentration, it was confirmed that a portion of the isocyanate group was capped by the choline chloride.

Next, the 3,5-dimethylpyrazole (DMP) was added to the reaction vessel. The addition ratio of DMP was the mole number shown in Tables 1 to 4 with respect to 100 mol of the isocyanate group provided in the isocyanurate derivative of XDI.

Further, the 1,1,3,3-tetramethylguanidine (TMG) was added to the reaction vessel. The addition ratio of TMG was the mole number shown in Tables 1 to 4 with respect to 100 mol of the isocyanate group provided in the isocyanurate derivative of XDI.

Thereafter, by measuring the FT-IR spectrum of the reaction solution, it was confirmed that the residue of the isocyanate group was partially blocked by DMP. Further, it was confirmed that the residue of the isocyanate group was partially capped by TMG.

Next, the acetic acid was added to the reaction solution and stirred. The addition ratio of the acetic acid was the mole number shown in Tables 1 to 4 with respect to 1 mol of the used TMG. Thus, the tertiary amino group derived from TMG was neutralized with the acetic acid, thereby forming the tertiary ammonium salt (ammonium acetate salt).

Thus, a reaction solution containing the block isocyanate was obtained. The block isocyanate included the quaternary ammonium group derived from the choline chloride, an oxyethylene group derived from the methoxypolyoxyethylene glycol (hydrophilic compound), and the tertiary ammonium salt (ammonium acetate salt) derived from TMG and the acetic acid, and had the excellent water dispersibility.

Thereafter, 150 parts by mass of the water was added to 50 parts by mass of the reaction solution containing the block isocyanate. Thereafter, the reaction solution and the water were emulsified by stirring with the homomixer. Next, the solvent was distilled off from the emulsion liquid, and a portion of the water was distilled off under the reduced pressure conditions.

Thus, as the antibacterial agent, an aqueous dispersion liquid of the block isocyanate was obtained. The solid concentration of the block isocyanate of the aqueous dispersion liquid was 20% by mass.

Example 21

At room temperature (25°C), 50 parts by mass of the isocyanurate derivative of the xylylene diisocyanate (XDI) (polyisocyanate compound, trade name: "TAKENATE D-131N", solid content of 75% by mass, isocyanate group content of 13.7%, manufactured by Mitsui Chemicals, Inc.) and the acetonitrile (solvent) were charged in the reaction vessel of the volume of 500 mL equipped with the stirrer, the thermometer, the cooling tube, and the nitrogen gas introduction tube.

Next, dimethyl amino ethanol (DMAE) was added to the reaction vessel. The addition ratio of DMAE was the mole number shown in Tables 1 to 4 with respect to 100 mol of the isocyanate group provided in the isocyanurate derivative of XDI.

Then, the temperature of the content of the reaction vessel was increased to 75°C with the mantle heater, and the isocyanurate derivative of XDI was reacted with DMAE. Further, by measuring the isocyanate group concentration, it was confirmed that a portion of the isocyanate group was capped by DMAE.

Next, the 3,5-dimethylpyrazole (DMP) was added to the reaction vessel. The addition ratio of DMP was the mole number shown in Tables 1 to 4 with respect to 100 mol of the isocyanate group provided in the isocyanurate derivative of XDI.

Next, by measuring the FT-IR spectrum of the reaction solution, it was confirmed that the residue of the isocyanate group was blocked by DMP, thereby forming the block isocyanate group.

Thereafter, the methyl chloride (about 5.7% tetrahydrofuran solution, manufactured by Tokyo Chemical Industry Co., Ltd.) was added to the reaction solution. Thus, the tertiary amino group derived from DMAE was quaternized.

Thus, a reaction solution containing the block isocyanate was obtained. The block isocyanate included the quaternary ammonium group derived from DMAE and the methyl chloride, and had the excellent water dispersibility.

Thereafter, 150 parts by mass of the water was added to 50 parts by mass of the reaction solution containing the block isocyanate. Thereafter, the reaction solution and the water were emulsified by stirring with the homomixer. Next, the solvent was distilled off from the emulsion liquid, and a portion of the water was distilled off under the reduced pressure conditions.

Comparative Example 1

The isocyanurate derivative of a hexamethylene diisocyanate (HDI) (polyisocyanate compound, trade name: "TAKENATE D-170N, solid content of 100% by mass, isocyanate group content of 20.7%, manufactured by Mitsui Chemicals, Inc.) was used instead of the isocyanurate derivative of the xylylene diisocyanate (XDI). Further, the choline chloride was not used. An aqueous dispersion liquid of the block isocyanate as the antibacterial agent was obtained in the

same manner as Example 19 except for this. The solid concentration of the block isocyanate of the aqueous dispersion liquid was 20% by mass.

Comparative Example 2

The isocyanurate derivative of the hexamethylene diisocyanate (HDI) (polyisocyanate compound, trade name: "TAKENATE D-170N, solid content of 100% by mass, isocyanate group content of 20.7%, manufactured by Mitsui Chemicals, Inc.) was used instead of the isocyanurate derivative of the xylylene diisocyanate (XDI). Further, the choline chloride was not used. An aqueous dispersion liquid of the block isocyanate as the antibacterial agent was obtained in the same manner as Example 18 except for this. The solid concentration of the block isocyanate of the aqueous dispersion liquid was 20% by mass.

Synthetic Example 1 (Preparation of Main Agent for Evaluation)

At room temperature (25°C), 703.3 parts by mass of a polytetramethylene ether glycol (trade name: PTG-2000SN, manufactured by HODOGAYA CHEMICAL CO., LTD.), 52.8 parts by mass of the triethylene glycol (manufactured by Tokyo Chemical Industry Co., Ltd.), 144.6 parts by mass of the N-methyldiethanolamine (manufactured by Tokyo Chemical Industry Co., Ltd.), and 293.3 parts by mass of the acetonitrile were charged in the reaction vessel of the volume of 3 L equipped with the stirrer, the thermometer, the cooling tube, and the nitrogen gas introduction tube, and these were stirred at a solution temperature of 40°C or less for 30 minutes.

Next, 346.1 parts by mass of a 1,3-bis(isocyanatomethyl)cyclohexane (trade name: TAKENATE 600, manufactured by Mitsui Chemicals, Inc.) was added to the reaction vessel. Then, the 1,3-bis(isocyanatomethyl)cyclohexane, the polytetramethylene ether glycol, the triethylene glycol, and the N-methyl diethanolamine were reacted for 30 minutes.

Thereafter, 0.4 parts by mass of a tin 2-ethylhexanoate (trade name: STANOCT, manufactured by Mitsubishi Chemical Group Corporation) was added to the reaction vessel, and the reaction vessel was heated until the solution temperature became 75°C. Then, the 1,3-bis(isocyanatomethyl)cyclohexane, the polytetramethylene ether glycol, the triethylene glycol, and the N-methyldiethanolamine were reacted at the solution temperature of 75°C for 3 hours. Thereafter, by measuring the FT-IR spectrum, it was confirmed that the isocyanate group was reacted. Thus, the polyurethane resin was produced.

Thereafter, the reaction solution containing the polyurethane resin was cooled to room temperature (25°C), and 72.9 parts by mass of the acetic acid and 586.7 parts by mass of the acetonitrile were added to the reaction solution and stirred for one hour. As described above, an acetonitrile solution of the polyurethane resin was obtained.

Next, 4431.8 parts by mass of the water which was cooled to 15°C to 25°C was charged into an SUS vessel of 20 L, and 2083.3 parts by mass of the acetonitrile solution of the polyurethane resin was added to the water to be emulsified, while stirred with the homomixer.

Next, the acetonitrile (solvent) was distilled off from the emulsion liquid, and a portion of the water was distilled off under the reduced pressure conditions.

As described above, the aqueous dispersion liquid of the polyurethane resin was prepared. The solid concentration of the polyurethane resin of the aqueous dispersion liquid was 26.2% by mass.

<Evaluation>

<1. Water Dispersibility>

As described in Examples and Comparative Examples, the water was added to the reaction solution containing the block isocyanate, and the reaction solution and the water were stirred with the homomixer to be emulsified. The dispersibility of the reaction solution with respect to the water at this time was evaluated as the water dispersibility of the block isocyanate. The criteria for evaluation are described as follows.

Excellent: the reaction solution containing the block isocyanate is rapidly dispersed in the water.

Good: the reaction solution containing the block isocyanate is dispersed in the water by stirring for a long time (0.5 hours or more).

Bad: the reaction solution containing the block isocyanate is not dispersed in the water. Precipitation occurred.

<2. Storage Stability>

The aqueous dispersion liquid of the block isocyanate was contained in a vessel. Then, the aqueous dispersion liquid of the block isocyanate was left to stand at 25°C for 7 days. Thereafter, the storage stability of the aqueous dispersion liquid was visually evaluated in five stages based on the following criteria. In each of the following evaluations, five is the

best. In addition, 1 is the most inferior.

5: no precipitation was confirmed in the aqueous dispersion liquid, and no deposit was confirmed on the vessel wall surface.

4: no precipitation was confirmed in the aqueous dispersion liquid, and slight deposits were confirmed on the vessel wall surface.

3: no precipitation was confirmed in the aqueous dispersion liquid, and deposits were confirmed on the vessel wall surface.

2: slight precipitation was confirmed in the aqueous dispersion liquid, and deposits were confirmed on the vessel wall surface.

1: precipitation was confirmed in the aqueous dispersion liquid, and deposits were confirmed on the vessel wall surface.

<3. Antibacterial Properties (Film Test)>

(Species in Test)

Escherichia Coli (E. coli, NBRC-3972, Independent Administrative Agency National Institute of Technology and Evaluation, Coliform Bacilli)

The antibacterial properties against Staphylococcus aureus were evaluated as follows in reference to "Antibacterial products- Test for Antibacterial Activity and Efficacy" of JIS Z 2801: 2010.

(1) Each of the block isocyanates (1.8 parts by mass) (based on solid content) of Examples and Comparative Examples, 88.2 parts by mass (based on solid content) of TAKELAC W-6355 (trade name, aqueous polyurethane resin, manufactured by Mitsui Chemicals, Inc.), and 10.0 parts by mass of isopropyl alcohol were mixed, thereby obtaining a liquid mixture. Further, the water was added to the liquid mixture, thereby adjusting the solid concentration of the liquid mixture to 10% by mass.

Next, the above-described liquid mixture was coated onto a polyethylene terephthalate film (trade name: "Lumirror S10", manufactured by Toray Industries, Inc.) using a bar coater, and heated at 150°C for 2 minutes to be cured. Thus, a film having a film thickness of 0.1 to 2.0 μm was obtained.

(2) The film was cut out into squares having 50± 2 mm squares to be used as test pieces. The test pieces were placed on a sterilized plastic schale and inoculated with 0.4 mL of a test bacterial solution (bacteria count: $2.5\times 10^5$ /mL to $10\times 10^5$/mL). The test bacterial solution was prepared by the following method.

In other words, the cultured bacteria were pre-cultured (BD Difco (trade name) LB Broth MILLER, manufactured by Becton, Dickinson and Company) at the temperature of 35± 1°C for 20± 4 hours in an LB medium in an incubator (first solution).

Next, the first solution was further inoculated on a slant medium (plain agar medium, Nutrient agar, manufactured by Merck KGaA), and pre-cultured at 35± 1°C for 20± 4 hours in the incubator (second solution).

Thereafter, the concentration of the second solution was appropriately adjusted by a separately prepared 1/500 plain broth medium (Nutrient broth, manufactured by Merck KGaA) (third solution).

(3) On the other hand, as a control sample, a polyethylene terephthalate film having a 50± 2 mm square (trade name: "Lumirror S10", manufactured by TORAY INDUSTRIES, INC.) was prepared, and the test bacterial solution was inoculated in the same manner as the test piece.

(4) Next, a biaxially oriented polypropylene (OPP) film having a 40± 2 mm square was placed over the inoculated test bacterial solution, and thus, the whole film was evenly inoculated with the test bacterial solution. Thereafter, the inoculated film was cultured at the temperature of 35± 1°C and relative humidity of 85± 5% for 20± 4 hours.

(5) Immediately after inoculating the test bacterial solution, or after culturing described in the above-described (4), 10 mL of an SCDLP medium (SCDLP Medium DAIGO (trade name), manufactured by NIHON PHARMACEUTICAL CO., LTD.) was added, and the test bacterial solution on the test piece was washed more than 4 times, and the bacterial solution was completely collected. In addition, the collected solution (wash-out solution) was immediately subjected to the next step, and viable bacteria count was measured.

(6) A 10 fold dilution series was prepared using the solution (wash-out solution) collected in the above-described (5) and a phosphate buffered saline.

Thereafter, each of the dilution series and a standard agar medium (standard agar medium DAIGO (trade name), manufactured by NIHON PHARMACEUTICAL CO., LTD.) were mixed, thereby fabricating a medium. Then, the cultured medium was cultured at the temperature of 35± 1°C for 20± 4 hours, and then, the number of colonies was measured. A schale of the dilution series having 30 to 300 colonies appeared was used as an object to be counted.

(7) The viable bacteria count was obtained based on the measurement results using the following calculation formula.

$$N = C \times D \times V/A$$

N: viable bacteria count (per 1 $cm^2$ of test piece)
C: number of colonies
D: dilution magnification (dilution magnification of each of the diluents in the adopted schale)
V: liquid volume of SCDLP medium used for wash-out (mL)
A: surface area ($cm^2$) of the cover film

(8) An antibacterial activity value was calculated using the following calculation formula.

$$R = (Ut - U0) - (At - U0) = Ut - At$$

R: antibacterial activity value
U0: average value of a logarithm of the viable bacteria count immediately after inoculation of a non-processed test piece
Ut: average value of a logarithm of the viable bacteria count after 24 hours of the non-processed test piece
At: average value of a logarithm of the viable bacteria count after 24 hours of an antibacterial processed test piece

Then, the obtained results were evaluated in three stages based on the following criteria. In each of the following evaluations, 3 is the best. In addition, 1 is the most inferior.

3: antibacterial activity value R of 3.0 or more (with strong antibacterial activity).
2: antibacterial activity value R of 2.0 or more and below 3.0 (with antibacterial activity)
1: antibacterial activity value R of below 2.0 (with no antibacterial activity)

<4. Antibacterial Properties (Fiber Test)>

(Species Tested)

Staphylococcus aureus (S. aureus, NBRC-12732, Independent Administrative Agency National Institute of Technology and Evaluation, Staphylococcus aureus)

The antibacterial properties with respect to the Staphylococcus aureus were evaluated as follows in reference to "Bacterial Liquid Absorption Method" described in "Textiles-Determination of Antibacterial Activity and Efficacy of Textile Products" of JIS L 1902:2015.

(1) By mixing 1.8 parts by mass of each of the block isocyanates of Examples and Comparative Examples (based on solid content), 88.2 parts by mass of the polyurethane resin of Synthesis Example 1 (based on solid content), and 10.0 parts by mass of isopropyl alcohol, a liquid mixture was obtained. Further, the water was added to the liquid mixture, thereby adjusting the solid concentration of the liquid mixture to 10% by mass.
Next, a cotton fabric (height of 25 cm× width of 25 cm, in conformity with JIS L0803, Khanaqin No. 3) was immersed in the above-described liquid mixture. Next, the cotton cloth was pulled up from the liquid mixture and squeezed well. Thereafter, the cotton fabric was dried in a dark place at normal temperature (25°C) for 24 hours. Furthermore, the cotton fabric after drying was dried in a heating furnace at 150°C for 2 minutes. Thus, an antibacterial processed test

piece was obtained.

(2) The antibacterial processed test piece (0.4 g) was put in a glass bottle, and 0.2 mL of a test bacterial solution was added dropwise into the antibacterial processed test piece. Thereafter, the glass bottle was capped and cultured at 37°C for 24 hours. Next, 20 mL of the wash-out solution was added to the glass bottle, and the bacterial solution was washed out from the antibacterial processed test piece. Thereafter, the viable bacteria count in the wash-out solution was measured by a pour plate culture method or a luminescence measurement method.

(3) The antibacterial activity value was calculated based on the measurement results using the following calculation formula.

$$R = (Ct - C0) - (Tt - T0)$$

R: antibacterial activity value
C0: average value of a logarithm of the viable bacteria count immediately after inoculation of the non-processed test piece
Ct: average value of a logarithm of the viable bacteria count after 24 hours of the non-processed test piece
T0: average value of a logarithm of the viable bacteria count immediately after inoculation of the antibacterial processed test piece
Ct: average value of a logarithm of the viable bacteria count after 24 hours of the antibacterial processed test piece

Then, the obtained results were evaluated in three stages based on the following criteria. In each of the following evaluations, 3 is the best. In addition, 1 is the most inferior.

3: antibacterial activity value R of 3.0 or more (with strong antibacterial activity).
2: antibacterial activity value R of 2.0 or more and below 3.0 (with antibacterial activity)
1: antibacterial activity value R of below 2.0 (with no antibacterial activity)

<5. Curability (Reactivity)>

The aqueous dispersion liquid of each of the block isocyanates (polyisocyanate component) of Examples and Comparative Examples and the aqueous dispersion liquid of the polyurethane resin (polyol component) of Synthesis Example 1 which was synthesized in Synthesis Example 1 were mixed. The ratio of the solid mass of the aqueous dispersion liquid of the block isocyanate to the solid mass of the aqueous dispersion liquid of the polyurethane resin of Synthesis Example 1 was 1 to 6.

Thereafter, the water was added to a dispersion liquid mixture of the aqueous dispersion liquid of the block isocyanate and the aqueous dispersion liquid of the polyurethane resin of Synthesis Example 1, thereby adjusting the final solid concentration to 20% by mass.

Further, a leveling agent (trade name: BYK-348, manufactured by BYK Japan KK.) was added to the dispersion liquid mixture to be stirred for 30 minutes. The addition ratio of the leveling agent was 0.5 parts by mass with respect to 100 parts by mass of the dispersion liquid mixture.

Thus, a curability evaluation liquid was prepared.

Next, the curability evaluation liquid was coated onto a polypropylene substrate. Thereafter, the coating film of the curability evaluation liquid was cured at 120 for 30 minutes. After measuring the mass of the coating film after curing, it was immersed in a solvent mixture having acetone to methanol mass ratio of 1 to 1 for 24 hours.

Thereafter, a gel portion was taken out by filtration, and thereafter, dried at 110°C for 3 hours, thereby measuring the mass of the coating film after immersion. Then, the gel fraction was calculated from the following calculation formula. The mass of the coating film after curing and before the immersion in the solvent mixture was defined as mass A, and the mass of the coating film after the immersion in the solvent mixture was defined as mass B.

$$\text{Gel fraction (\%)} = 100 \times \text{mass B} / \text{mass A}$$

Then, the curability of the block isocyanate in the case where a curing temperature of the coating film was 120°C was evaluated in five stages based on the following criteria.

4: gel fraction of 60% or more
3: gel fraction of 50% or more and below 60%

2: gel fraction of 40% or more and below 50%
1: gel fraction of 0% or more and below 40%

<6. Light Resistance>

The aqueous dispersion liquid of each of the block isocyanates (polyisocyanate component) of Examples and Comparative Examples and the aqueous dispersion liquid of the polyurethane resin (polyol component) of Synthesis Example 1 were mixed. The ratio of the solid mass of the aqueous dispersion liquid of the block isocyanate to the solid mass of the aqueous dispersion liquid of the polyurethane resin was 1 to 6.
Thereafter, the water was added to the dispersion liquid mixture of the aqueous dispersion liquid of the block isocyanate and the aqueous dispersion liquid of the polyurethane resin of Synthesis Example 1, thereby adjusting the final solid concentration to 20% by mass.
Further, the leveling agent (trade name: BYK-348, manufactured by BYK Japan KK.) was added to the dispersion liquid mixture to be stirred for 30 minutes. The addition ratio of the leveling agent was 0.5 parts by mass with respect to 100 parts by mass of the dispersion liquid mixture. Thus, the curability evaluation liquid was prepared.
Next, the curability evaluation liquid was coated onto the polypropylene substrate. Thereafter, the coating film of the curability evaluation liquid was cured at 150 for 30 minutes.
Thereafter, by using a weather meter FDP manufactured by Suga Test Instruments Co., Ltd., a light resistance test of the coating film was carried out by alternately repeating the day conditions (28 W/$m^2$, 60°C, 10% of relative humidity, 4 hours) and the night conditions (0 W/$m^2$, 50°C, 100% of relative humidity, 4 hours).
Then, by using a color difference meter CR-200 manufactured by Minolta Co., Ltd., a yellowing degree (b*) in 168 hours was measured. An amount of change in the yellowing degree (Δb*) when the yellowing degree before the light resistance test was b* (0) was calculated by the following formula.

$$\Delta b^* = b^* - b^*(0)$$

The amount of change in the yellowing degree was evaluated based on the following criteria. In the order from 1 to 3, it was judged that the light resistance was high.
3 (Excellent): amount of change in the yellowing degree (Δb*) of below 1
2 (Good): amount of change in the yellowing degree (Δb*) of 1 or more and below 3
1 (Bad): amount of change in the yellowing degree (Δb*) of 3 or more

[Table 1]

Table 1

| No. | | | Ex. 1 | Ex. 2 | Ex. 3 | Ex. 4 | Ex. 5 | Ex. 6 |
|---|---|---|---|---|---|---|---|---|
| Formulation | Polyisocyanate (a) | Trade Name | D-131N | D-131N | D-131N | D-131N | D-131N | D-131N |
| | | Isocyanate Kind | XDI | XDI | XDI | XDI | XDI | XDI |
| | | Modification Form | Isocyanurate | Isocyanurate | Isocyanurate | Isocyanurate | Isocyanurate | Isocyanurate |
| | Antibacterial-Non-Block Capping Agent (b) (mol/100 mol of NCO in Polyisocyanate (a)) | Choline Chloride | 20 | - | - | 20 | 20 | 20 |
| | | Choline Bromide | - | 20 | - | - | - | - |
| | | Choline Acetate | - | - | 20 | - | - | - |
| | Tertiary Amino Group-Containing Compound (b1, d1) (mol/100 mol of NCO in Polyisocyanate (a)) | TMG | - | - | - | - | - | - |
| | | DMAE | - | - | - | - | - | - |
| | Acid (d2) (eq./Tertiary Amino Group-Containing Compound) | Acetic Acid | - | - | - | - | - | - |
| | Quaternized Agent (b2) (eq./Tertiary Amino Group-Containing Compound) | Methyl Chloride | - | - | - | - | - | - |

(continued)

| No. | | | | Ex. 1 | Ex. 2 | Ex. 3 | Ex. 4 | Ex. 5 | Ex. 6 |
|---|---|---|---|---|---|---|---|---|---|
| | Non-Antibacterial-Block Capping Agent (c) (mol/100 mol of NCO in Polyisocyanate (a)) | DMP | | 80 | 80 | 80 | - | - | - |
| | | MEKO | | - | - | - | 40 | - | - |
| | | IMZ | | - | - | - | 40 | 80 | - |
| | | DiPA | | - | | | - | - | 80 |
| | Hydrophilic Compound (e) (mol/100 mol of NCO in Isocyanate Component) | MeOPEG | | - | - | - | - | - | - |
| Evaluation | Water Dispersibility | | | Excellent | Excellent | Excellent | Excellent | Excellent | Excellent |
| | Storage Stability | | | 4 | 5 | 5 | 4 | 4 | 4 |
| | Antibacterial Properties | Film (E.Coli) | Initial Stage | 3 | 3 | 3 | 3 | 3 | 3 |
| | | | Heating (15 min) | 2 | 2 | 2 | 2 | 2 | 2 |
| | | Fiber (Cotton/-S.aureus) | Initial Stage | 3 | 3 | 3 | 3 | 3 | 3 |
| | | | Washing (10 times) | 3 | 3 | 3 | 3 | 3 | 3 |
| | Curability (Reactivity) | Gel Fraction | 120°C/30 min | 2 | 2 | 2 | 2 | 2 | 2 |
| | Light Resistance | Δb* | - | 2 | 2 | 2 | 2 | 2 | 2 |

[Table 2]

Table 2

| No. | | | Ex. 7 | Ex. 8 | Ex. 9 | Ex. 10 | Ex. 11 | Ex. 12 |
|---|---|---|---|---|---|---|---|---|
| Formulation | Polyisocyanate (a) | Trade Name | D-131N | D-131N | D-131N | D-131N | D-131N | D-131N |
| | | Isocyanate Kind | XDI | XDI | XDI | XDI | XDI | XDI |
| | | Modification Form | Isocyanurate | Isocyanurate | Isocyanurate | Isocyanurate | Isocyanurate | Isocyanurate |
| | Antibacterial-Non-Block Capping Agent (b) (mol/100 mol of NCO in Polyisocyanate (a)) | Choline Chloride | 75 | 55 | 34 | 30 | 10 | 7 |
| | | Choline Bromide | - | - | - | - | - | - |
| | | Choline Acetate | - | - | - | - | - | - |
| | Tertiary Amino Group-Containing Compound (b1, d1) (mol/100 mol of NCO in Polyisocyanate (a)) | TMG | - | - | - | - | - | - |
| | | DMAE | - | - | - | - | - | - |
| | Acid (d2) (eq./Tertiary Amino Group-Containing Compound) | Acetic Acid | - | - | - | - | - | - |
| | Quatemized Agent (b2) (eq./Tertiary Amino Group-Containing Compound) | Methyl Chloride | - | - | - | - | - | - |
| | Non-Antibacterial-Block Capping Agent (c) | DMP | 25 | 45 | 66 | 70 | 90 | 93 |
| | | MEKO | - | - | - | - | - | - |
| | | IMZ | - | - | - | - | - | - |
| | | DiPA | - | - | - | - | - | - |

(continued)

| No. | | | | Ex. 7 | Ex. 8 | Ex. 9 | Ex. 10 | Ex. 11 | Ex. 12 |
|---|---|---|---|---|---|---|---|---|---|
| | (mol/100 mol of NCO in Polyisocyanate (a)) | | | | | | | | |
| | Hydrophilic Compound (e) (mol/100 mol of NCO in Isocyanate Component) | MeOPEG | | - | - | - | - | - | - |
| Evaluation | Water Dispersibility | | | Good | Good | Good | Excellent | Excellent | Good |
| | Storage Stability | | | 2 | 2 | 3 | 4 | 4 | 3 |
| | Antibacterial Properties | Film (E.Coli) | Initial Stage | 3 | 3 | 3 | 3 | 3 | 2 |
| | | | Heating (15 min) | 2 | 2 | 2 | 2 | 2 | 2 |
| | | Fiber (Cotton/-S.aureus) | Initial Stage | 3 | 3 | 3 | 3 | 3 | 2 |
| | | | Washing (10 times) | 2 | 3 | 3 | 3 | 3 | 2 |
| | Curability (Reactivity) | Gel Fraction | 120°C/30 min | 1 | 2 | 2 | 2 | 2 | 2 |
| | Light Resistance | Δb* | - | 2 | 2 | 2 | 2 | 2 | 2 |

[Table 3]

Table 3

| No. | | | Ex. 13 | Ex. 14 | Ex. 15 | Ex. 16 | Ex. 17 |
|---|---|---|---|---|---|---|---|
| Formulation | Polyisocyanate (a) | Trade Name | D-170N | D-127N | D-370N | D-204 | D-110N |
| | | Isocyanate Kind | HDI | H6XDI | PDI | TDI | XDI |
| | | Modification Form | Isocyanurate | Isocyanurate | Isocyanurate | Isocyanurate | TMP Adduct |
| | Antibacterial-Non-Block Capping Agent (b) (mol/100 mol of NCO in Polyisocyanate (a)) | Choline Chloride | 18 | 20 | 20 | 20 | 20 |
| | | Choline Bromide | - | - | - | - | - |
| | | Choline Acetate | - | - | - | - | - |
| | Tertiary Amino Group-Containing Compound (b1, d1) (mol/100 mol of NCO inPolvisocvanate (a)) | TMG | - | - | - | - | - |
| | | DMAE | - | - | - | - | - |
| | Acid (d2) (eq./Tertiary Amino Group-Containing Compound) | Acetic Acid | - | - | - | - | - |
| | Quaternized Agent (b2) (eq./Tertiary Amino Group-Containing Compound) | Methyl Chloride | - | - | - | - | - |
| | Non-Antibacterial-Block Capping Agent (c) (mol/100 mol of NCO in Polyisocyanate (a)) | DMP | 82 | 80 | 80 | 80 | 80 |
| | | MEKO | - | - | - | - | - |
| | | IMZ | - | - | - | - | - |
| | | DiPA | - | - | - | - | - |
| | Hydrophilic Compound (e) (mol/100 mol of NCO in Isocyanate Component) | MeOPEG | - | - | - | - | -z |
| | Water Dispersibility | | Excellent | Excellent | Excellent | Excellent | Excellent |
| | Storage Stability | | 4 | 4 | 4 | 4 | 4 |

(continued)

| No. | | | | Ex. 13 | Ex. 14 | Ex. 15 | Ex. 16 | Ex. 17 |
|---|---|---|---|---|---|---|---|---|
| Evaluation | Antibacterial Properties | Film (E.Coli) | Initial Stage | 3 | 3 | 3 | 3 | 3 |
| | | | Heating (15 min) | 2 | 2 | 2 | 2 | 2 |
| | | Fiber (Cotton/-S.aureus) | Initial Stage | 3 | 3 | 3 | 3 | 3 |
| | | | Washing (10 times) | 2 | 2 | 2 | 3 | 3 |
| | Curability (Reactivity) | Gel Fraction | 120°C/30 min | 2 | 2 | 2 | 2 | 2 |
| | Light Resistance | $\Delta b^*$ | | 3 | 3 | 3 | 1 | 2 |

[Table 4]

Table 4

| No. | | | Ex. 18 | Ex. 19 | Ex. 20 | Ex. 21 | Comparative Ex. 1 | Comparative Ex. 2 |
|---|---|---|---|---|---|---|---|---|
| Formulation | Polyisocyanate (a) | Trade Name | D-131N | D-131N | D-131N | D-131N | D-170N | D-170N |
| | | Isocyanate Kind | XDI | XDI | XDI | XDI | HDI | HDI |
| | | Modification Form | Isocyanurate | Isocyanurate | Isocyanurate | Isocyanurate | Isocyanurate | Isocyanurate |
| | Antibacterial-Non-Block Capping Agent (b) (mol/100 mol of NCO in Polyisocyanate (a)) | Choline Chloride | 20 | 20 | 20 | - | - | - |
| | | Choline Bromide | - | - | - | - | - | - |
| | | Choline Acetate | - | - | - | - | - | - |
| | Tertiary Amino Group-Containing Compound (b1, d1) (mol/100 mol of NCO in Polyisocyanate (a)) | TMG | - | 5 | 5 | - | 20 | - |
| | | DMAE | - | - | - | 20 | - | - |
| | Acid (d2) (eq./Tertiary Amino Group-Containing Compound) | Acetic Acid | - | 2 | 2 | - | 2 | - |
| | Quaternized Agent (b2) (eq./Tertiary Amino Group-Containing Compound) | Methyl Chloride | - | - | - | 1 | - | - |
| | Non-Antibacterial-Block Capping Agent (c) | DMP | 78 | 75 | 73 | 80 | 80 | 98 |
| | | MEKO | - | - | - | - | - | - |
| | | IMZ | - | - | - | - | - | - |

(continued)

| No. | | | | Ex. 18 | Ex. 19 | Ex. 20 | Ex. 21 | Comparative Ex. 1 | Comparative Ex. 2 |
|---|---|---|---|---|---|---|---|---|---|
| | (mol/100 mol of NCO in Polyisocyanate (a)) | DiPA | | - | - | - | - | - | - |
| | Hydrophilic Compound (e) (mol/100 mol of NCO in Isocyanate Component) | MeOPEG | | 2 | - | 2 | - | - | 2 |
| Evaluation | Water Dispersibility | | | Excellent | Excellent | Excellent | Good | Excellent | Excellent |
| | Storage Stability | | | 5 | 5 | 4 | 2 | 5 | 5 |
| | Antibacterial Properties | Film (E.Coli) | Initial Stage | 3 | 3 | 3 | 2 | 3 | 1 |
| | | | Heating (15 min) | 2 | 2 | 2 | 1 | 1 | 1 |
| | | Fiber (Cotton/-S.aureus) | Initial Stage | 3 | 3 | 3 | 2 | 2 | 1 |
| | | | Washing (10 times) | 3 | 3 | 3 | 2 | 1 | 1 |
| | Curability (Reactivity) | Gel Fraction | 120°C/30 min | 2 | 3 | 3 | 2 | 4 | 1 |
| | Light Resistance | Δb* | - | 2 | 2 | 2 | 2 | 3 | 3 |

The details of abbreviations in Tables are described below.

D-131N: isocyanurate derivative of xylylene diisocyanate (XDI), trade name: TAKENATE D-131N, solid content of 75% by mass, isocyanate group content of 13.7%, manufactured by Mitsui Chemicals, Inc.
D-170N: isocyanurate derivative of hexamethylene diisocyanate (HDI), trade name: TAKENATE D-170N, solid content of 100% by mass, isocyanate group content of 20.7%, manufactured by Mitsui Chemicals, Inc.
D-127N: isocyanurate of 1,3-bis(isocyanatomethyl)cyclohexane (1,3-$H_6$XDI), trade name: TAKENATE D-127N, solid content of 75% by mass, isocyanate group content of 13.5%, manufactured by Mitsui Chemicals, Inc.
D-370N: isocyanurate of pentamethylene diisocyanate (PDI), trade name: STABiO D-370N, solid content of 100% by mass, isocyanate group content of 25%, manufactured by Mitsui Chemicals, Inc.
D-204: isocyanurate of tolylene diisocyanate (TDI), trade name: TAKENATE D-204, solid content of 50% by mass, isocyanate group content of 7.5%, manufactured by Mitsui Chemicals, Inc.
D-110N: trimethylolpropane (TMP) adduct of xylylene diisocyanate (XDI), trade name: TAKENATE D-110N, solid content of 75% by mass, isocyanate group content of 11.5%, manufactured by Mitsui Chemicals, Inc.
TMG: 1,1,3,3-tetramethylguanidine
DMAE: dimethylaminoethanol
DMP: 3,5-dimethylpyrazole
MEKO: methyl ethyl ketone oxime
IMZ: imidazole
DiPA: diisopropylamine
MeOPEG: methoxypolyoxyethylene glycol, methoxy PEG1000, hydrophilic compound

Example 22

The antibacterial agent of Example 1 was diluted with the water, thereby obtaining an antibacterial agent diluent. The solid concentration of the antibacterial agent diluent was 0.84% by mass. Next, a standard fabric for antibacterial test (cotton) (manufactured by Japan Textile Evaluation Technology Council) was immersed in the above-described antibacterial agent diluent. Next, the standard fabric for antibacterial test was pulled up from the antibacterial agent diluent. Further, the standard fabric for antibacterial test was squeezed so as to have a wet pickup of 100%. Further, the standard fabric for antibacterial test was allowed to stand in the dark place and dried at normal temperature (25°C) for 24 hours. Thereafter, the standard fabric for antibacterial test after drying was dried in the heating furnace at 170°C for 3 minutes. Thus, an antibacterial processed test fabric was obtained.

Next, the antibacterial processed test fabric was washed 10 times using a JAFET standard mixing detergent in conformity with "Textiles- Domestic Washing and Drying procedures for Textile Testing" of JIS L 1930: 2014.

Thereafter, each of the antibacterial properties of the antibacterial processed test fabric which was washed 10 times and the antibacterial properties of the antibacterial processed test fabric which was not washed was evaluated. More specifically, the antibacterial properties with respect to Staphylococcus aureus was evaluated with reference to the "Bacterial Liquid Absorption Method" described in the "Textiles- Determination of antibacterial activity and efficacy of textile products" of JIS L 1902: 2015 by the above-described method as "4. Antibacterial Properties (Fiber Test).

As a result, the antibacterial activity value R of the unwashed antibacterial processed test fabric was 2.0 or more. From this result, it was confirmed that the above-described antibacterial agent alone exhibited the antibacterial properties.

The antibacterial activity value R of the antibacterial processed test fabric which was washed 10 times was also 2.0 or more. From this result, it was confirmed that the antibacterial properties were maintained even after the washing.

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

INDUSTRIAL APPLICATION

The antibacterial agent of the present invention is preferably used in fields such as fiber treatment agents, water repellents, coating compositions, adhesives, antistatic agents, papermaking treatment agents, wet paper enhancers, receiving layers of recording media, electrodeposition coating compositions, antibacterial-antivirus compositions, encapsulated compositions, optical members, and latex compositions.

## Claims

**1.** An antibacterial agent comprising a block isocyanate, wherein

the block isocyanate includes
a capped residue (A) of a polyisocyanate,
an antibacterial-non-block capping group (B), and
a non-antibacterial-block capping group (C);
the capped residue (A) of the polyisocyanate is formed by capping an isocyanate group of the polyisocyanate having a plurality of isocyanate groups;
the antibacterial-non-block capping group (B) is formed by non-reproducibly capping at least a portion of the plurality of isocyanate groups;
the non-antibacterial-block capping group (C) is formed by reproducibly capping at least a portion of the plurality of isocyanate groups; and
the antibacterial-non-block capping group (B) includes a quaternary ammonium group.

**2.** The antibacterial agent according to claim 1, wherein

the block isocyanate further includes an antibacterial-block capping group (D),
the antibacterial-block capping group (D) is formed by reproducibly capping at least a portion of the plurality of isocyanate groups, and
the antibacterial-block capping group (D) includes a tertiary ammonium salt.

**3.** The antibacterial agent according to claim 1, wherein

the block isocyanate further includes a hydrophilic group (E),
the hydrophilic group (E) is formed by non-reproducibly capping at least a portion of the plurality of isocyanate groups, and
the hydrophilic group (E) includes a polyoxyethylene group.

**4.** The antibacterial agent according to claim 1, wherein
the block isocyanate is not subjected to a quaternized treatment.

**5.** The antibacterial agent according to claim 1, wherein

the block isocyanate is a reaction product of a raw material component;
the raw material component includes
a polyisocyanate (a) having a plurality of isocyanate groups and for forming the capped residue (A),
an antibacterial-non-block capping agent (b) reactable with at least a portion of the plurality of isocyanate groups and for forming the antibacterial-non-block capping group (B), and
a non-antibacterial-block capping agent (c) reactable with at least a portion of the plurality of isocyanate groups and for forming the non-antibacterial-block capping group (C); and
the antibacterial-non-block capping agent (b) includes a quaternary ammonium group-containing compound.

**6.** The antibacterial agent according to claim 5, wherein
a ratio of the antibacterial-non-block capping agent (b) is 5 mol or more with respect to 100 mol of the isocyanate group of the polyisocyanate (a).

**7.** The antibacterial agent according to claim 5, wherein
the quaternary ammonium group-containing compound includes a trialkylalkanol ammonium compound.

**8.** The antibacterial agent according to claim 5, wherein

the raw material component further includes
a tertiary amino group-containing compound (d1) reactable with at least a portion of the plurality of isocyanate groups and for adding a tertiary amino group, and
an acid (d2) capable of neutralizing at least a portion of the tertiary amino group and for forming a tertiary ammonium salt.

**9.** The antibacterial agent according to claim 5, wherein

the raw material component further includes a hydrophilic compound (e), and

the hydrophilic compound (e) includes a polyoxyethylene compound.

**10.** The antibacterial agent according to claim 1, wherein the polyisocyanate includes an araliphatic polyisocyanate derivative.

**INTERNATIONAL SEARCH REPORT**

International application No. **PCT/JP2023/012471**

**A. CLASSIFICATION OF SUBJECT MATTER**

***A01N 43/64***(2006.01)i; ***A01N 43/56***(2006.01)i; ***A01P 3/00***(2006.01)i; ***C08G 18/00***(2006.01)i; ***C08G 18/08***(2006.01)i; ***C08G 18/28***(2006.01)i; ***C08G 18/80***(2006.01)i
FI: A01N43/64 105; C08G18/80; C08G18/28 015; C08G18/00 C; C08G18/08 009; A01P3/00; A01N43/56 B

According to International Patent Classification (IPC) or to both national classification and IPC

**B. FIELDS SEARCHED**

Minimum documentation searched (classification system followed by classification symbols)

C08G18/00; C08G18/08; C08G18/28; C08G18/80; A01P3/00; A01N43/56; A01N43/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/038863 A1 (DAIEI SANGYO KAISHA, LTD.) 09 March 2017 (2017-03-09) claims, examples | 1-10 |
| A | JP 2019-112510 A (MEISEI KAGAKU KOGYO KK, MITSUI CHEMICALS, INC.) 11 July 2019 (2019-07-11) claims, examples | 1-10 |
| A | WO 2013/047642 A1 (TB KAWASHIMA CO., LTD., HIROSHIMA UNIV.) 04 April 2013 (2013-04-04) claims, examples | 1-10 |
| E, X | JP 2023-44027 A (MITSUI CHEMICALS, INC.) 30 March 2023 (2023-03-30) examples | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/012471**

| Patent document cited in search report | Publication date (day/month/year) | Patent family member(s) | Publication date (day/month/year) |
|---|---|---|---|
| WO 2017/038863 A1 | 09 March 2017 | JP 2017-137364 A<br>US 2018/0291201 A1<br>claims, examples<br>EP 3345948 A1<br>KR 10-2018-0048905 A<br>CN 108291003 A | |
| JP 2019-112510 A | 11 July 2019 | (Family: none) | |
| WO 2013/047642 A1 | 04 April 2013 | TW 201313753 A | |
| JP 2023-44027 A | 30 March 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013047642 A